# EUROPÄISCHE PATENTSCHRIFT

(11) **EP 3 980 595 B1**
(45) Veröffentlichungstag und Bekanntmachung des Hinweises auf die Patenterteilung: **08.11.2023**
(21) Anmeldenummer: 20734109.0
(22) Anmeldetag: 29.05.2020
(51) Int. Cl.: D21C 1/00, D21C 3/00, D21C 9/00, C08L 97/00

(54) **GEMEINSAMES AUFBEREITEN VON LIGNOCELLULOSISCHEM ROHSTOFF UND CELLULOSE-HALTIGEM LIGNIN-FREIEM PRODUKT**
JOINT PROCESSING OF LIGNOCELLULOSE RAW MATERIAL AND CELLULOSE-CONTAINING LIGNINE-FREE PRODUCT
TRAITEMENT COMMUN D'UNE MATIÈRE PREMIÈRE LIGNOCELLULOSIQUE ET D'UN PRODUIT SANS LIGNINE CONTENANT DE LA CELLULOSE

(30) Priorität: 04.06.2019 EP 19178183
(43) Veröffentlichungstag der Anmeldung: 13.04.2022
(73) Patentinhaber: LENZING AKTIENGESELLSCHAFT, 4860 Lenzing (AT)
(72) Erfinder: HERCHL, Richard, 4910 Ried im Innkreis (AT); SCHILD, Gabriele, 4863 Seewalchen (AT); WEILACH, Christian, 4840 Vöcklabruck (AT)
(74) Vertreter: Dilg, Haeusler, Schindelmann Patentanwaltsgesellschaft mbH
(86) Internationale Anmeldenummer: PCT/EP2020/065042
(87) Internationale Veröffentlichungsnummer: WO 2020/245055

(56) Entgegenhaltungen:
- WO-A1-2015/052028

## Beschreibung

Die Erfindung betrifft ein Verfahren zum Bereitstellen eines aufbereiteten Cellulose-aufweisenden Mischausgangsstoffs, insbesondere eines Mischausgangsstoffs zum Bilden eines, insbesondere regenerierten, cellulosischen Formkörpers. Weiterhin betrifft die Erfindung ein Verfahren zum Herstellen eines (regenerierten) cellulosischen Formkörpers aus dem aufbereiteten Cellulose-aufweisenden Mischausgangsstoff. Ferner betrifft die Erfindung den (insbesondere regenerierten) Formkörper. Außerdem betrifft die Erfindung ein Verwenden von einem lignocellulosischen Rohstoff und einem Cellulose-haltigen Lignin-freien Produkt zum Herstellen des cellulosischen Formkörpers. Weiterhin betrifft die Erfindung ein Abfallprodukt (insbesondere eine Ablauge) aus dem beschriebenen Verfahren und ein Verwenden des Abfallprodukts als Energieerzeugungsmedium, Nebenprodukt, oder Chemikalien-Rückgewinnungsmedium.

Die Erfindung kann sich somit auf das technische Gebiet des Bereitstellens von aufbereiteten, Cellulose-haltigen (Misch-) Ausgangsstoffen beziehen. Insbesondere kann sich die Erfindung auf das technische Gebiet des Herstellens eines (regenerierten) cellulosischen Formkörpers aus dem aufbereiteten, Cellulose-haltigen Mischausgangsstoff beziehen. Ferner kann sich die Erfindung auf das technische Gebiet des Recycelns von Feststoffen, insbesondere (Alt-) Textilien, beziehen.

Das Herstellen eines cellulosischen Formkörpers, wie z.B. Textilfasern aber auch Papierfasern, benötigt Zellstoff als Ausgangsmaterial. Prinzipiell muss also eine Zellstoffquelle zum Gewinnen der notwendigen Cellulose bereitgestellt werden. Cellulose kann beispielsweise aus Pflanzenprodukten wie Baumstämmen gewonnen werden. Ferner kann Cellulose auch aus rezyklierten Cellulose-aufweisenden Materialien gewonnen werden. Letztere umfassen z.B. Altpapier oder Alttextilien.

Bei der Verwendung von rezyklierten Materialien (z.B. Alttextilien) als Rohstoffe für die Zellstoff- und die anschliessende Textilien- oder Papierherstellung kann sich das Problem der Reinheit dieser Rezyklate stellen. Diese sind häufig mit nicht holztypischen Materialien verunreinigt. Insbesondere sind heutige Alttextilien stark mit Kunststoffen belastet - einerseits, weil Sie aus Kunststoffen bestehen (solche lassen sich aber als Ganzes sortieren), andererseits aber, weil heutzutage viele auch vorwiegend aus Naturfasern bestehenden Alttextilien partiell mit Kunststoffanteilen belastet sind oder auf eine Naturfaser ein Kunststoff zur Eigenschaftsveränderung appliziert wurde. Textilrecycling cellulosischer Fasern ist nicht verbreitet. Vom weltweiten Textilmarkt werden gegenwärtig weniger als 5% wiederverwendet. Der Großteil (> 70%) wandert auf Deponien/Verbrennung oder wird etwa (25%) für minderwertige Anwendungsfelder (Putz- und Reinigungstücher) bereitgestellt, um letztlich wieder auf Deponien oder in der Müllverbrennung zu landen.

Die Gewinnung von Cellulose aus Pflanzenprodukten ist eine seit Jahrhunderten geübte Praxis und hat zwei Hauptstoßrichtungen in der nachfolgenden Anwendung: i) Papierherstellung und ii) Faserherstellung für textile und nichttextile Bereiche. i) und ii) unterscheiden sich letztlich in der Qualität der gewünschten Cellulosehalbfabrikate. WO 2015/052028 A1 beschreibt beispielsweise ein Verfahren zum Herstellen eines lignocellulosischen Rohstoffs, welcher defibrillierte Cellulose enthält. Unter anderem wird auch das Mischen von Altpapier-Cellulosefasern und Holzfasern beschrieben. Ein Holzstoff und defibrillierte Cellulosefasern werden zusammen mit Bindemittel verpresst, um einen Holz(faser)werkstoff, z. B. Spanplatten, bereitzustellen.

Derzeit wird die Gewinnung von Cellulose aus Pflanzenprodukten und Rezyklaten wie (Alt-) Textilien vollständig getrennt durchgeführt. Dies liegt daran, dass beide Stoffgruppen sehr unterschiedliche Eigenschaften und Zusammensetzungen aufweisen und daher unterschiedliche Aufbereitungsprozesse notwendig sind. Dies hat den Nachteil, dass aufwendige und kostenintensive Prozesse separat in unterschiedlichen Industrieanlagen durchgeführt werden müssen.

Es ist eine Aufgabe der vorliegenden Erfindung, einen Cellulose-aufweisenden aufbereiteten Ausgangsstoff (z.B. zum Herstellen eines (regenerierten) cellulosischen Formkörpers) auf effiziente, robuste, und ressourcensparende, insbesondere kostensparende, Weise bereitzustellen.

Diese Aufgabe wird durch die Gegenstände gemäß den unabhängigen Patentansprüchen gelöst. Bevorzugte Ausgestaltungen ergeben sich aus den abhängigen Patentansprüchen.

Gemäß einem Aspekt der vorliegenden Erfindung ist ein Verfahren beschrieben zum Bereitstellen eines aufbereiteten Cellulose-aufweisenden Mischausgangsstoffs zum Bilden eines regenerierten cellulosischen Formkörpers). Das Verfahren weist auf: i) Bereitstellen eines ersten Ausgangsstoffs, welcher einen lignocellulosischen Rohstoff (insbesondere einen Holzstoff, Holz, Holzschnitzel, Einjahrespflanzen) aufweist, ii) Bereitstellen eines zweiten Ausgangsstoffs, welcher ein (verarbeitetes) Cellulose-haltiges (im Wesentlichen) Lignin-freies Produkt (insbesondere Textilien, Alttextilien, Papier, Altpapier) aufweist, iii) Mischen des ersten Ausgangsstoffs und des zweiten Ausgangsstoffs zu einem Mischausgangsstoff, und iv) (zumindest teilweise) gemeinsames Aufbereiten (z.B. in einem Koch-Prozess und/oder einem Bleich-Prozess) des ersten Ausgangsstoffs und des zweiten Ausgangsstoffs zum Erhalten des aufbereiteten Mischausgangsstoffs (insbesondere eines Mischzellstoffs), wobei der lignocellulosische Rohstoff eines ist aus der Gruppe, welche besteht aus: einem Holzstoff, insbesondere Holzschnitzel, Einjahrespflanzen und wobei das Cellulose-haltige Lignin-freie Produkt Textilien aufweist.

Gemäß einem weiteren Aspekt der vorliegenden Erfindung ist ein Verfahren zum Herstellen eines (insbesondere regenerierten) cellulosischen Formkörpers beschrieben. Das Verfahren aufweisend: i) Bereitstellen eines oben beschriebenen aufbereiteten Cellulose-aufweisenden Mischausgangsstoffs, und ii) Bilden des cellulosischen Formkörpers aus dem aufbereiteten Cellulose-aufweisenden Mischausgangsstoff (z.B. mittels einem Lyocellverfahren, einem Viskoseverfahren (insbesondere einem Carbamatverfahren oder einem Kaltalkaliverfahren), oder einem Papierherstellungsverfahren).

Gemäß einem weiteren Aspekt der vorliegenden Erfindung ist der aufbereitete Cellulose-aufweisende Mischausgangsstoff (Zellstoff) beschrieben, welcher gemäß dem oben ausgeführten Verfahren bereitgestellt wurde. Dieser aufbereitete Cellulose-aufweisende Mischausgangsstoff ist von gewöhnlichem Zellstoff verschieden, wie beispielsweise mikroskopisch festgestellt werden kann. Ferner kann der aufbereitete Cellulose-aufweisende Mischausgangsstoff zumindest eines der folgenden Merkmale aufweisen: i) intrinsische nicht-cellulosische Fremdstoffe (insbesondere Metalloxide, weiter insbesondere Pigmente), ii) synthetische Fasern, insbesondere PUR, weiter insbesondere Elastan, iii) 10% oder weniger Cellulose mit einem durchschnittlichen Polymerisationsgrad in dem Bereich 50 bis 200 Monomere, iv) Cellulose mit einem durchschnittlichen Polymerisationsgrad von 300 Monomeren oder mehr (insbesondere 500 Monomeren oder mehr), v) ein Anteil von Naturfasern (insbesondere Baumwoll-Fasern), welcher größer als 1%, insbesondere größer als 10%, ist.

Gemäß einem weiteren Aspekt der vorliegenden Erfindung ist ein gemeinsames Verwenden eines lignocellulosischen Rohstoffs, aufweisend einen Holzstoff (insbesondere Holz, Holzschnitzel, Einjahrespflanzen) und eines Cellulose-haltigen Lignin-freien Produkts, aufweisend Textilien in zumindest einem Aufbereitungsschritt (insbesondere eines Koch-Prozesses) zum Bereitstellen eines Mischzellstoffs für das Herstellen eines cellulosischen Formkörpers beschrieben. Gemäß dieser Offenbarung wird auch beschrieben, dass ein Cellulose-haltiges Lignin-freies Produkt ein verarbeitetes Produkt ist, wie z.B. (Alt-) Textilien und/oder Papier.

Gemäß einem weiteren Aspekt der vorliegenden Erfindung ist ein Abfallprodukt aus dem oben beschriebenen, erfindungsgemäßen Verfahren, insbesondere eine Ablauge aus dem Verfahren, beschrieben (insbesondere eine Ablauge, welche bei dem oben beschriebenen Verfahren gebildet wird), welche aufweist: i) Lignin, ii) zumindest ein Reaktionsprodukt aus einem Koch-Prozess, insbesondere ein Sulfat-Prozess oder ein Sulfit-Prozess (weiter insbesondere eines aus der Gruppe, welche besteht aus: Natriumsulfat, Natriumsulfid, Calciumoxid, Magnesiumoxid, und Schwefeldioxid), und iii) zumindest eines aus der Gruppe, welche besteht aus: Baumwollfasern und synthetischen Fasern (insbesondere Kunststoff).

Gemäß einem weiteren Aspekt der vorliegenden Erfindung ist ein Verwenden des Abfallprodukts als Energieerzeugungsmedium, Nebenprodukt, oder Chemikalien-Rückgewinnungsmedium beschrieben.

Im Rahmen dieses Dokuments kann unter dem Begriff "Cellulose" insbesondere eine organische Verbindung verstanden werden, die Bestandteil pflanzlicher Zellwände ist oder synthetisch hergestellt werden kann. Cellulose ist ein Polysaccharid (d.h. ein Vielfachzucker). Cellulose ist unverzweigt und weist typischerweise mehrere hundert bis zehntausende β-D-Glucose-Moleküle (β-1,4-glycosidische Bindung) bzw. Cellobiose-Einheiten auf. Aus Cellulosemolekülen werden von Pflanzen kontrolliert Cellulosefasern aufgebaut. Mit einem technischen Prozess können Cellulosemoleküle unter Bildung von Regeneratfasern zusammengelagert werden.

Im Rahmen dieses Dokuments kann unter dem Begriff "Formkörper" insbesondere ein zwei- oder dreidimensionaler geometrischer Körper verstanden werden, der ein Resultat eines Verfahrens zum Herstellen bzw. Wiedergewinnen von Cellulose ist. Insbesondere kann unter einem Formkörper ein zwei- oder dreidimensionales Objekt verstanden werden, das Cellulose aufweist oder daraus besteht und aus gelöstem Zellstoff hergestellt wird. Formkörper können insbesondere Lyocell-Formkörper, Viskose-Formkörper, Modal-Formkörper, oder Papierformkörper (Papierstoff) sein. Typische Formkörper sind Filamente, Fasern, Schwämme und/oder Filme. Grundsätzlich eignen sich alle Arten von Celluloseformkörpern für Ausführungsbeispiele der Erfindung. Dabei sind als Fasern sowohl Endlosfilamente als auch geschnittene Stapelfasern mit herkömmlichen Abmessungen (zum Beispiel 38 mm Länge) und Kurzfasern zu verstehen. Zur Herstellung von Fasern kommen dabei sowohl Verfahren mit Abzugseinrichtungen nach einer oder mehreren Extrusionsdüsen als auch andere Verfahren, wie insbesondere Melt-Blowing-Verfahren, in Frage. Alternativ zu Fasern kann als Formkörper auch eine Cellulose aufweisende Folie hergestellt werden, d.h. ein flächiger und im Wesentlichen homogener Film mit oder aus Cellulose. Folien können insbesondere dadurch hergestellt werden, dass durch Einstellung der Prozessparameter eines Lyocell-Verfahrens ein Koagulieren zumindest teilweise erst nach Auftreffen der Filamente auf einer Aufnahmefläche ausgelöst wird. Unter Folien können flächige Celluloseformkörper verstanden werden, wobei die Dicke dieser Folien einstellbar ist (zum Beispiel durch Auswahl einer Anzahl seriell angeordneter Düsenbalken). Andere Ausführungsformen eines Formkörpers sind ein Gewebe und ein Vlies aus Cellulosefilamenten bzw. aus Cellulosefasern, insbesondere ein Spinnvlies aus integral miteinander verschmolzenen ("merging") im Wesentlichen kontinuierlichen Cellulosefilamenten ("melt blown"). Hierbei kann unter einem Gewebe insbesondere ein textiles Flächengebilde aus mindestens zwei (vorzugsweise rechtwinklig oder nahezu rechtwinklig) verkreuzten Fadensystemen (oder Fasersystemen) verstanden werden, wobei Fäden (oder Fasern) in Längsrichtung als Kettfäden und Fäden (oder Fasern) in Querrichtung als Schussfäden bezeichnet werden können. Ein Vlies oder Nonwoven kann als ungeordnetes (insbesondere in Wirrlage vorliegendes) Gebilde aus Filamenten oder Fasern oder geschnittenen Garnen begrenzter Länge bezeichnet werden, die zu einer Faserschicht oder einem Faserflor zusammengefügt und (insbesondere reibschlüssig) miteinander verbunden sind. Ein Formkörper kann auch in der Gestalt einer Kugel geschaffen werden. Als Formkörper können auch Cellulose aufweisende Partikel, wie insbesondere Beads (d.h. ein Granulat bzw. Kügelchen) oder Flakes, bereitgestellt werden, die in dieser Form weiterverarbeitet werden können. Ein weiterer Formkörper kann ein Vliesstoff (z.B. Netzwerk aus Endlosfilament) sein, welcher z.B. mittels eines Meltblown-Verfahrens hergestellt wird. Mögliche Celluloseformkörper sind also auch partikuläre Strukturen wie Granulat, sphärische Pulver oder Fibride. Eine Formgebung eines Formkörpers erfolgt bevorzugt durch die Extrusion einer cellulosehaltigen Spinnlösung durch eine Extrusionsdüse, da auf diese Weise große Mengen der Celluloseformkörper mit sehr einheitlicher Form hergestellt werden können. Ein weiterer möglicher Celluloseformkörper ist ein Schwamm oder allgemeiner ein poröser Formkörper. Die genannten Formkörper können gemäß exemplarischen Ausführungsbeispielen zum Beispiel zur Herstellung von Garnen, Textilien, Gelen, Papier, Karton, Filtern, oder Verbundwerkstoffen verwendet werden.

Im Rahmen dieses Dokuments kann unter dem Begriff "Lyocell-Verfahren" insbesondere ein Verfahren zum Herstellen von Cellulose nach einem Direkt-Lösemittelverfahren verstanden werden. Die Cellulose kann für das Lyocell-Verfahren aus einem Ausgangsstoff gewonnen werden, der diese Cellulose enthält. Der Ausgangsstoff kann bei dem Lyocell-Verfahren in einem geeigneten Lösungsmittel (insbesondere aufweisend tertiäre Aminoxide wie zum Beispiel N-Methylmorpholin-N-oxid (NMMO) und/oder ionische Flüssigkeiten, d.h. niedrig schmelzende Salze, die aus Kationen und Anionen aufgebaut sind) gelöst werden. Das Lösen kann insbesondere durch Wasserentzug und/oder ohne chemische Modifizierung erfolgen. Die erhaltene Lösung, die auch als Dope oder Spinnlösung bezeichnet werden kann, kann bei dem Lyocell-Verfahren anschließend durch eine oder mehrere Spinndüsen gepresst werden. Dadurch gebildete Filamente können während und/oder nach ihrem freien oder gesteuerten Fallen durch einen Luftspalt in einem wasserhaltigen Bad (insbesondere in einem Bad mit wässriger NMMO-Lösung) und/oder in dem Luftspalt befindliche Luftfeuchtigkeit ausgefällt werden.

Lyocell bezeichnet eine Cellulose aufweisende Regeneratfasergattung, die nach einem Direkt-Lösemittelverfahren hergestellt wird. Die Cellulose wird für das Lyocell-Verfahren aus einem Rohstoff (z.B. Holz, Alttextilien...) extrahiert. Der so gewonnene Zellstoff kann anschließend in N-Methylmorpholin-N-oxid (NMMO), einem Lösungsmittel, durch Wasserentzug ohne chemische Modifizierung gelöst, filtriert und anschließend durch Spinndüsen gepresst werden. Die so geformten Filamente werden nach Passieren eines Luftspaltes in einem Bad mit wässriger NMMO-Lösung ausgefällt, und anschließend z.B. zu Stapelfasern geschnitten.

Im Rahmen dieses Dokuments kann unter dem Begriff "Viskoseverfahren" insbesondere ein Verfahren zum Herstellen von Cellulose nach einem Nassspinnverfahren verstanden werden. Die Cellulose kann für das Viskoseverfahren aus einem Ausgangsstoff (insbesondere Holz, ein Holzzellstoff, oder Alttextilien) gewonnen werden, der diese Cellulose enthält.

Im Rahmen dieses Dokuments kann unter dem Begriff "Viskoseverfahren" ein Xanthogenatverfahren verstanden werden. In aufeinanderfolgenden Prozessstufen kann bei dem Viskoseverfahren, welches als Xanthogenatverfahren durchgeführt wird, der Ausgangsstoff zuerst mit einer Base (zum Beispiel mit Natronlauge) behandelt werden, wodurch sich Alkalicellulose bildet. Bei einer anschließenden Umsetzung dieser Alkalicellulose mit Schwefelkohlenstoff bildet sich Cellulose-Xanthogenat. Daraus kann durch weitere Zugabe einer Base (insbesondere von Natronlauge) eine Viskose-Spinnlösung erzeugt werden, die durch eine oder mehrere Spinndüsen gepresst werden kann. In einem Spinnbad entstehen durch Koagulation Viskose-Filamente. Die so hergestellten Viskose-Filamente werden im Anschluss z.B. zu Viskose-Stapelfasern geschnitten.

Im Rahmen dieses Dokuments kann unter dem Begriff "Viskoseverfahren" auch ein Carbamatverfahren verstanden werden, bei welchem anstelle von Schwefelkohlenstoff Ammoniak zur Herstellung eines löslichen Cellulosederivates eingesetzt wird. Dabei entsteht anstelle des Cellulose-Xanthogenats das sogenannte Cellulose-Carbamat. Analog der Weiterverwendung des Cellulose-Xanthogenats wird aus dem Cellulose-Carbamat eine spinnfähige Lösung hergestellt, aus welcher, nach dem Pressen durch eine oder mehrere Spinndüsen, in einem Spinnbad Cellulose-Filamente regeneriert werden können.

Weiter kann im Rahmen dieses Dokuments unter dem Begriff "Viskoseverfahren" auch ein Kaltalkaliverfahren verstanden werden, bei welchem Cellulose ohne weitere Derivatisierung zum Xanthogenat oder Carbamat in einem temperierten, insbesondere gekühlten, wässrigen alkalischen Medium in Lösung gebracht wird. Die Temperatur des wässrigen alkalischen Mediums beträgt in einem Ausführungsbeispiel weniger als 20° C, insbesondere auch weniger als 5° C. Zur Verbesserung des Löseverhaltens können dem wässrigen alkalischen Medium Zusätze wie z.B. Harnstoff, Thioharnstoff, Zinkoxid, Polyethylenglykol oder Tenside beigefügt werden. Wiederum werden aus der Cellulose enthaltenden Spinnlösung, nach dem Durchtritt durch eine oder mehrere Spinndüsen, mittels Fällung in einem sauren oder alkalischen Spinnbad Cellulose-Filamente regeneriert.

Als Viskosefasern werden Chemiefasern bzw. Regeneratfasern bezeichnet, die mittels eines Viskoseverfahrens (insbesondere eines Xanthogenatverfahrens, eines Carbamatverfahrens oder eines Kaltalkaliverfahrens) genannten Nassspinnverfahrens hergestellt werden. Der Ausgangsrohstoff des Viskoseverfahrens ist hochreine Cellulose in Form von Chemiezellstoff.

Im Rahmen dieses Dokuments kann unter dem Begriff "Produkt" insbesondere ein verarbeiteter Stoff verstanden werden, welcher sich durch die Verarbeitung von einem Rohstoff unterscheidet. Beispielsweise kann Holz als ein Rohstoff (insbesondere als ein lignocellulosischer Rohstoff) zum Gewinnen für Cellulose bezeichnet werden, während ein Textil oder ein Papier ein (bereits verarbeitetes) Produkt darstellt.

Im Rahmen dieses Dokuments kann unter dem Begriff "Cellulose-haltiges Lignin-freies Produkt" insbesondere ein bereits verarbeitetes Produkt verstanden werden, welches Cellulose und im Wesentlichen kein Lignin aufweist (z.B. Textilien oder Papier). Der Begriff "Lignin-frei" bezieht sich hierbei vorzugsweise nicht auf absolute Lignin-Freiheit, sondern auf "im Wesentlichen Lignin-frei". Unvermeidbare Reste (z.B. im ppm Bereich) sollen von dem Begriff "Lignin-frei" als abgedeckt verstanden werden.

Im Rahmen dieses Dokuments können unter dem Begriff "Textilien" sowohl "Neutextilien" als auch "Altkleider" und "Reste einer Kleiderherstellung" verstanden werden.

Der Begriff "Neutextilien" umfasst textile Rohstoffe (Naturfasern, Chemiefasern), und nichttextile Rohstoffe, die durch ein oder mehr Verfahren zu linien-, flächenförmigen oder räumlichen Produkten verarbeitet wurden. Der Begriff "Neutextilien" kann sich sowohl mit dem Begriff "Ausschuss aus der Kleiderherstellung" decken als auch fertige Produkte (z.B. Kleidung, Bettwäsche) bezeichnen, wobei letztere im Wesentlichen noch nicht von einem Benutzer verwendet/getragen wurden.

Im Rahmen dieses Dokuments kann unter dem Begriff "Reste aus einer Kleidungsherstellung" insbesondere Ausschuss und/oder Verschnitt eines Cellulose aufweisenden oder daraus bestehenden Textils oder Garnes verstanden werden, wobei diese Reste während eines Verfahrens zum Herstellen von Kleidung anfallen. Beim Herstellen von Kleidung wird zum Beispiel ein Cellulose aufweisendes Textil als Ausgangsstoff hergestellt, aus dem dann flächige Teile (zum Beispiel in Form einer T-Shirt-Hälfte) ausgeschnitten werden. Übrig bleiben Reste, die gemäß einem exemplarischen Ausführungsbeispiel wieder einem Verfahren zum Herstellen eines Cellulose aufweisenden Formkörpers zugeführt werden können. Bei Resten aus einer Kleidungsherstellung kann es sich also um einen Cellulose aufweisenden oder daraus bestehenden Ausgangsstoff handeln, der zum Wiedergewinnen von Cellulose verwendet werden kann, bevor ein Verbraucher die Reste als Kleidung oder in anderer Weise verwendet hat. Reste aus einer Kleidungsherstellung können insbesondere aus im Wesentlichen reiner Cellulose gebildet sein, insbesondere ohne separate und nicht Cellulose aufweisende Fremdkörper (wie zum Beispiel Knöpfe, Textildruck oder Nähte).

Im Rahmen dieses Dokuments können unter dem Begriff "Altkleider" insbesondere Cellulose aufweisende Kleidungsstücke und Heimtextilien (z.B. Bettwäsche) verstanden werden, die bei Rückgewinnung zumindest eines Teils der Cellulose bereits von einem Verbraucher benutzt (insbesondere getragen) worden sind. Bei Altkleidern kann es sich also um einen Cellulose aufweisenden Ausgangsstoff handeln, der erhebliche Mengen von Fremdstoffen aufweisen kann (aber nicht muss) und zum Wiedergewinnen von Cellulose verwendet werden kann, nachdem ein Verbraucher die Altkleider als Kleidung oder in anderer Weise verwendet hat. Altkleider können insbesondere aus einer Mischung aus Cellulose und einem oder mehreren Fremdstoffen gebildet sein, insbesondere aufweisend (insbesondere bei Kleidungsstücken häufig verwendeten) synthetischen Kunststoff (wie zum Beispiel Polyester und/oder Elastan) und/oder separate und nicht Cellulose aufweisende Fremdkörper (wie zum Beispiel Knöpfe, Textildruck oder Nähte). Unter Polyester werden insbesondere Polymere mit Esterfunktionen (R-[-CO-O-]-R) in ihrer Hauptkette verstanden. Zu Polyestern gehören Polycarbonate und Polyethylenterephthalat. Unter Elastan wird insbesondere eine dehnbare Chemiefaser mit hoher Elastizität verstanden. Ein Elastan zugrundeliegendes Blockcopolymer kann einen Massenanteil von mindestens 85 % Polyurethan enthalten.

Im Rahmen dieses Dokuments kann unter dem Begriff "Papierherstellung" insbesondere verstanden werden, dass aus einem Cellulose-haltigen und aufbereiteten Ausgangsstoff ein cellulosischer Formkörper gebildet wird, bei welchem es sich um einen Papierstoff handelt. Ein "Papierstoff" kann in diesem Zusammenhang als ein Papierausgangsstoff verstanden werden, aus welchem dann ein Papierprodukt wie z.B. ein Papier, ein Karton, ein Filter oder dergleichen gebildet werden kann. Ein Papierstoff kann ein Verbundmaterial sein, das zumindest Zellstoff (Cellulose) und einen Binder enthält. Ein "Papierstoff" kann auch Papier oder papierähnliche Materialien, sowie Karton, Filtermaterial, Isolationsmatten, Saugvliese, faserverstärkte Flachmaterialien usw. umfassen. Papierstoff kann durch Entwässerung einer Fasersuspension, z.B. auf einem Sieb, gebildet werden. Ein Papierstoff kann ein flächiger Werkstoff (Faservlies) sein, der im Wesentlichen aus (Cellulose-) Fasern besteht. Der Papierstoff kann in folgenden Arbeitsschritten weiter verdichtet und getrocknet werden. Alle Bearbeitungsschritte, welche von einem cellulosischen Formkörper zu einem Papierstoff führen, können also als Papierherstellungsverfahren bezeichnet werden. Ferner können auch alle Bearbeitungsschritte, welche von einem cellulosischen Formkörper zu einem Papier bzw. von einem Papierstoff zu einem Papierprodukt führen, als Papierherstellung bezeichnet werden.

Im Rahmen dieses Dokuments kann unter dem Begriff "Aufbereiten" insbesondere verstanden werden, dass ein eingehender Ausgangsstoff derart behandelt (aufbereitet) wird, dass sich ein ausgehender, aufbereiteter Ausgangsstoff in seinen chemischen/physikalischen Eigenschaften bzw. in seiner stofflichen Zusammensetzung zumindest teilweise von dem eingehenden Ausgangsstoff unterscheidet. Ein Aufbereitungsprozess kann beispielsweise einen Koch-Prozess aufweisen. Ferner kann ein Aufbereitungsprozess einen Bleich-Prozess aufweisen. Weiterhin kann ein Aufbereitungsprozess auch einen Reinigungsprozess oder einen Trocknungsprozess aufweisen.

Im Rahmen dieses Dokuments kann unter dem Begriff "lignocellulosischer Rohstoff" ein pflanzlicher nachwachsender Rohstoff verstanden werden, welcher in seiner Gerüststruktur Cellulose und Lignin enthält. Beispiele für lignocellulosische Rohstoffe können sein: Holz bzw. Holzstoff, insbesondere Holzschnitzel, und Einjahrespflanzen.

Der Begriff "Holz" kann das harte Gewebe von Pflanzen (Stamm, Äste und Zweige) wie Bäumen und Sträuchern bezeichnen. Kennzeichnend für Holz kann die Einlagerung von Lignin (insbesondere in Zellwände) sein. Entsprechend kann Holz auch als lignifiziertes (verholztes) pflanzliches Gewebe begriffen werden.

Im Rahmen dieses Dokuments kann unter dem Begriff "Holzstoff" insbesondere jeglicher Stoff verstanden werden, welcher aus Holz hergestellt ist, zumindest teilweise aus Holz besteht und/oder Holz aufweist. Ein Baumstamm kann ebenso einen Holzstoff darstellen, wie Holzschnitzel oder Holzchips. Im weiteren Sinne kann auch ein Papier(stoff), welches/welcher aus Holz hergestellt wurde, ein Holzstoff sein.

Im Rahmen des Dokuments können unter dem Begriff "Einjahrespflanzen" insbesondere solche Pflanzen verstanden werden, welche innerhalb einer Vegetationsperiode von der Keimung bis zur Erntereife gedeihen. Beispiele für "Einjahrespflanzen" können sein: Linter (aus Baumwolle), Hanf, Jute, Flax, Leinen, Getreide (wobei Stroh als Nebenprodukt anfällt), Elefantengras (miscanthus sinensis). Obwohl Einjahrespflanzen Lignocellulose aufweisen, sind sie im Wesentlichen weitgehend unverholzt.

Im Rahmen dieses Dokuments kann unter dem Begriff "Mischausgangsstoff" insbesondere verstanden werden, dass zumindest zwei Ausgangsstoffe, welche voneinander prinzipiell verschieden sind (z.B. Holz und Textilien) vermischt werden, um einen gemischten Ausgangsstoff zu erhalten. Bislang können verschiedene Holzarten (z.B. Pappel, Birke und Ahorn) gemeinsam aufgeschlossen werden. Diese müssen ähnliche Holzqualitäten haben, damit die Mischung ermöglicht ist. Eine Mischung von lignocellulosischen Rohstoffen wie Holz mit Lignin-freien Produkten ist bislang aber nicht bekannt/gelungen.

Die Mischung kann zu verschiedenen Zeitpunkten eines Aufbereitens (z.B. eines Koch-Prozesses oder eines Bleich-Prozesses) stattfinden. Es können auch mehr als zwei Ausgangsstoffe gemischt werden, um einen Mischausgangsstoff zu erhalten (beispielsweise ein Holzstoff, Alttextilien und Altpapier). In einem Ausführungsbeispiel kann der Mischausgangsstoff ein Mischzellstoff sein, welcher Zellstoff aus Holzstoff und aus Alttextilien aufweist. Ferner kann der Mischausgangsstoff Reste aus den Ausgangsstoffen, z.B. Lignin oder synthetische Fasern, aufweisen.

Im Rahmen dieses Dokuments kann unter dem Begriff "(synthetischer) Kunststoff" insbesondere ein Stoff verstanden werden, welcher aus Makromolekülen aufgebaut ist und synthetisch hergestellt wird. Die jeweiligen Makromoleküle eines Kunststoffes sind Polymere und daher aus wiederholenden Grundeinheiten (Wiederholeinheiten) aufgebaut. Die Größe der Makromoleküle eines Polymers kann zwischen einigen tausend bis über eine Million Grundeinheiten variieren. Beispielsweise besteht das Polymer Polyethylen (PE) aus aneinander verbundenen, sich vielfach wiederholenden Ethyleneinheiten. Hierbei können die Polymere unverzweigte, verzweigte oder vernetzte Moleküle sein. Kunststoffe können bezüglich ihrer physikalischen Eigenschaften im Prinzip in drei Gruppen unterteilt werden: Thermoplaste, Duroplaste und Elastomere. Ferner können diese Eigenschaften auch in Untergruppen kombiniert sein, z.B. bei thermoplastischen Elastomeren. Wichtige Merkmale von Kunststoffen sind ihre technischen Eigenschaften, wie Formbarkeit, Härte, Elastizität, Bruchfestigkeit, Temperatur-, Wärmeformbeständigkeit und chemische Beständigkeit, die sich durch die Wahl der Makromoleküle, Herstellungsverfahren und in der Regel durch Beimischung von Additiven in weiten Grenzen variieren lassen. Typische Reaktionen zum Herstellen von synthetischem Kunststoff aus Monomeren oder Pre-Polymeren sind: Kettenpolymerisation, Polyaddition oder Polykondensation. Beispiele für synthetische Kunststoffe, welche insbesondere auch in Textilien verwendet werden, sind z.B. Polyurethan (PUR), insbesondere als Bestandteil von Elastan, Polyester (PE, z.B. Polyethylenterephthalat (PET)), Polyamid (PA, z.B. Nylon, Perlon) und Polyether, insbesondere Polyethylenglykol (PEG) als Bestandteil von Elastan. Synthetischer Kunststoff kann in diesem Zusammenhang synthetische Fasern in einem Textil bzw. Alttextil bilden.

Gemäß einem Ausführungsbeispiel kann die Erfindung auf der Idee basieren, dass ein Cellulose-aufweisender aufbereiteter Ausgangsstoff (z.B. zum Herstellen eines (regenerierten) cellulosischen Formkörpers) auf effiziente, robuste, und ressourcensparende (insbesondere Kosten-sparende) Weise bereitgestellt werden kann, wenn ein erster Ausgangsstoff, welcher einen lignocellulosischen Rohstoff (z.B. einen Holzstoff) aufweist, und ein zweiter Ausgangsstoff, welcher Cellulose-haltige Lignin-freie Produkte (z.B. Alttextilien) aufweist, während eines Aufbereitungsverfahrens gemischt und (zumindest teilweise) gemeinsam aufbereitet werden. Konventionell werden eine Holz-Fraktion und eine Rezyklat-Fraktion aufgrund der sehr unterschiedlichen Zusammensetzung getrennt aufbereitet, was zu hohem Aufwand und hohen Kosten führt. Zudem haben diese Aufbereitungen auch Nachteile wie zu kurze Cellulose Kettenlängen und hohe Konzentrationen an Kunststofffasern. Es wurde aber nun überraschend erkannt, dass es mit Vorteil möglich ist, eine Lignin-haltige (z.B. Holzstoff)-Fraktion und eine Lignin-freie (z.B. Textil)-Fraktion gemeinsam aufzubereiten. Auf diese Weise können zwei separate Industrieanlagen zusammengelegt werden und sowohl Aufwand als auch Kosten können gespart werden. Weiterhin können auch bisherige Probleme der getrennten Aufbereitungsprozesse überwunden werden. In diesem Zusammenhang ist die Erkenntnis besonders unerwartet, dass der gemeinsame Aufbereitungs- (z.B. Koch) Prozess nicht nur technisch möglich ist, sondern gleichzeitig auch noch Vorteile in Hinblick auf die Eigenschaften eines aufbereiteten Mischausgangsstoffs bzw. des daraus herzustellenden Formkörpers ist. Beispielsweise hat sich herausgestellt, dass eine Reihe von Inhaltsstoffen der Alttextilien bzw. deren Abbauprodukte mit typischen Molekülstrukturen des Lignins (z.B.: -OH, -CO-, -COOH) in Interaktion treten und damit nachhaltig vom erwünschten Zellstoff (der Cellulose) getrennt werden.

In einem Ausführungsbeispiel erfordern sowohl die Art und Menge der einzusetzenden Reagenzien, der pH-Wert, Temperatur und Druckverhältnisse, sowie Reaktionszeiten, im Wesentlichen keine Adaptierung gegenüber den bekannten und bewährten Holzaufschlussverfahren.

Somit kann das beschriebene Verfahren in bestehenden Industrieanlagen unter weitgehendster Berücksichtigung von bestehenden und bewährten Verfahrensschritten und unter Beibehaltung der bisherigen Vorkehrungen für geschlossene Kreisläufe (Umweltschutzaspekte) implementiert werden. Dies ist vor allem deshalb von besonderem Interesse, weil dadurch die bereits in Betrieb befindlichen Anlangen und Systeme, welche allfälligen Auflagen, Reach-Standards und möglichen Betriebsgenehmigungen entsprechen, so mit minimalen Anpassungen/Änderungen weiterbetrieben werden können.

Der zentrale Vorteil der Erfindung kann in einem Ausführungsbeispiel darin gesehen werden, dass das Verfahren deutlich vereinfacht wird, sowie dass die Produktionskosten signifikant geringer sind.

Ferner führt das beschriebene Verfahren zu der Produktion einer neuartigen Ablauge, welche vorteilhaft (besonders hoher Brennwert) in bereits existierenden Anlagen weiterverarbeitet werden kann, z.B. zur Gewinnung von Nebenprodukten, oder zur energetischen Nutzung (Verbrennung). Es ist somit keine separate Aufbereitung der Ablauge nötig, sondern vielmehr eine überraschend vorteilhafte Nutzung als Energieerzeugungsmedium.

Gemäß einem Ausführungsbeispiel weist der lignocellulosische Rohstoff zumindest eines aus der Gruppe auf, welche besteht aus: einem Holzstoff (bzw. Holz), insbesondere Holzschnitzel, Einjahrespflanzen. Dies hat den Vorteil, dass nachwachsende Rohstoffe direkt als Cellulose-Quelle eingesetzt werden können.

Gemäß einem weiteren Ausführungsbeispiel weist das Bereitstellen des ersten Ausgangsstoffs ferner auf: Vorbereiten des lignocellulosischen Rohstoffs, insbesondere Zerkleinern, weiter insbesondere Entfernen von Rinde. Somit kann der lignocellulosische Rohstoff auf effiziente und etablierte Weise dem beschriebenen Verfahren zugeführt werden.

Als Rohstoff für den Holzstoff können beispielsweise geeignete Baumstämme verwendet werden. Diese können in einem ersten Vorbereitungsschritt auf bekannte Weise mechanisch entrindet werden. Weiterhin können die entrindeten Baumstämme mechanisch, gegebenenfalls in mehreren differenzierten Schritten, zu sogenannten "Holzschnitzeln" zerteilt werden. Gewöhnlich weisen diese Holzschnitzel (oder Holzchips) eine Länge in dem Bereich 2 bis 8 cm und/oder eine Dicke in dem Bereich 0,2 bis 2,0 cm auf. Diese Längen- und Dickenangaben können sich jeweils auf einen durchschnittlichen Wert beziehen. Ferner können sich diese Längen- und Dickenangaben auch auf absolute Werte beziehen, so dass innerhalb einer Charge von Holzschnitzeln die Maße jedes Holzschnitzels im Wesentlichen in den angegebenen Bereichen ist. Das Vorbereiten des Holzstoffs kann weiterhin ein Mischen verschiedener Holzarten bzw. Holz-Fraktionen umfassen. Dieses Mischen kann selektiv durchgeführt werden, um einen ersten Ausgangsstoff mit bestimmten erwünschten Eigenschaften bereitzustellen.

Weitere Zerkleinerungsschritte können sich am Mass der für eine bestimmte Qualität gewünschten Faserlängen orientieren. Die physikalische Eindringzeit von flüssigen Reagenzien und der Ausschwemmgeschwindigkeit von Reaktionsresultaten kann wie eine zeitliche Bremse wirken, je grösser das zu durchdringende Volumen (also die Grösse des Holzschnitzels) ist. Je kleiner der Holzstoff hierbei zerstückelt ist, desto homogener und kürzer können die Faserlängen sein.

Gemäß der Erfindung weist das Cellulose-haltige Lignin-freie Produkt Textilien auf. Gemäß dieser Offenbarung kann das Cellulose-haltige Lignin-freie Produkt auch Alttextilien und/oder Papier aufweisen. Dies hat den Vorteil, dass bereits verarbeitete Produkte effizient als Cellulose-Quelle recycelt werden können.

Gemäß einem weiteren Ausführungsbeispiel weist das Bereitstellen des zweiten Ausgangsstoffs ferner auf: Vorbereiten des Cellulose-haltigen Lignin-freien Produkts, insbesondere Zerkleinern, weiter insbesondere zumindest teilweises Entfernen von nicht-Faser Fremdstoffen (z.B. Knöpfe, Reisverschlüsse, Nieten, Beschläge...). Auf diese Weise können auch die Alttextilien effizient und in möglichst reiner bzw. vorteilhafter Zusammensetzung dem beschriebenen Verfahren zugeführt werden.

Die Textilien können in der Regel einen überwiegenden Anteil an cellulosischen Fasern (z.B. Baumwolle, Viskose, Lyocell), aber zumindest teilweise auch synthetische Fasern aufweisen. Die (Alt-) Textilien können zunächst mechanisch von nicht-Faser Fremdstoffen wie Knöpfen, Reißverschlüssen, und weiteren Applikationen befreit werden. Dies kann durch mechanisches Zerkleinern wie Mahlen, Schneiden, und Schreddern durchgeführt werden. In einem Ausführungsbeispiel können die (Alt-) Textilien in Segmente zerteilt werden, welche in den Maßen (Länge und Dicke) im Wesentlichen den Maßen der Holzschnitzel (siehe oben) entsprechen. Damit kann einerseits eine gute Durchmischbarkeit und eine stabile Konsistenz im Koch-Prozess, andererseits eine vergleichbare Länge/Dicke der resultierenden Cellulose-Fasern sichergestellt werden. Das Vorbereiten kann auch den Einsatz von automatischen Sortieranlagen aufweisen, welche den Anteil von metallischen Knöpfen, Nieten, Beschlägen und Ähnlichem deutlich reduzieren können.

In einem weiteren Ausführungsbeispiel können bestimmte nicht-Faser Fremdstoffe (z.B. Knöpfe aus Kunststoff (in der Regel aus gehärtetem ungesättigtem Polyester-UP) oder Horn (Keratinproteine)) im zweiten Ausgangsstoff belassen werden. Dies liegt daran, dass es bei einem folgenden Koch-Prozess unter den üblichen Kochbedingungen zu einer zumindest partiellen Verseifung kommen kann. Dabei kann die Kochdauer des gesamten Ansatzes länger sein und/oder die Bedingungen (z.B. Laugenkonzentration, Temperatur, Druck) können angepasst werden. Von Metall-Fremdstoffen kann insbesondere Aluminium unter stark alkalischen Kochbedingungen zu wasserlöslichen Aluminaten oxidiert werden. Messing ist weder gegenüber NaOH, noch gegenüber Na₂S beständig.

Gemäß einem weiteren Ausführungsbeispiel weisen die Textilien (insbesondere Alttextilien) nicht-cellulosische Fremdstoffe (insbesondere synthetische Fasern wie Kunststoff-Fasern) auf. Das Bereitstellen kann dann ferner aufweisen: i) mechanisches Abtrennen zumindest eines Teils der nicht-cellulosischen Fremdstoffe, und/oder ii) chemisches Abtrennen zumindest eines Teils der nicht-cellulosischen Fremdstoffe. Dies kann den Vorteil haben, dass ein gründliches Abreichern mit bekannten und etablierten Verfahren durchgeführt werden kann.

Gemäß einem Ausführungsbeispiel kann das Abtrennen der nicht-Faserbestandteile von den Faserbestandteilen aufgrund unterschiedlicher physikalischer Eigenschaften, insbesondere mittels Metallabscheidens und/oder gravitativen Abscheidens, erfolgen. Metallische Komponenten (zum Beispiel Reißverschlüsse, Nieten, etc.) können zum Beispiel aufgrund ihrer magnetischen Eigenschaften abgetrennt werden. Auch unterschiedliche Einflüsse der Gravitationskraft auf unterschiedliche Bestandteile können zum Trennen eingesetzt werden.

Gemäß einem Ausführungsbeispiel kann das mechanische Abtrennen basierend auf Dichteunterschieden zwischen den nicht-cellulosischen Fasern und den cellulosischen Fasern erfolgen. Zum Beispiel können in einer Zentrifuge Materialien unterschiedlicher Dichte aufgrund unterschiedlich starker Zentrifugalkräfte separiert werden. Nach Überführen der Bestandteile in ein flüssiges Medium können sich diese aufgrund unterschiedlicher Dichten zum Teil auf der Oberfläche ansammeln, während andere Bestandteile schweben oder sich am Boden absetzen.

Gemäß einem Ausführungsbeispiel kann das mechanische Abtrennen basierend auf unterschiedlichen elektrostatischen Eigenschaften zwischen den nicht-cellulosischen Fasern und den cellulosischen Fasern erfolgen. Aufgrund unterschiedlicher elektrostatischer Eigenschaften können die unterschiedlichen Fasern auf ein angelegtes elektrisches Feld in unterschiedlicher Weise reagieren. Dies wiederum erlaubt ein Auftrennen cellulosischer Fasern gegenüber nicht-cellulosischen Fasern.

Gemäß einem Ausführungsbeispiel kann das mechanische Abtrennen ein Suspendieren (d.h. ein Überführen in eine Suspension) der Faserbestandteile in einem flüssigen Medium, insbesondere einem wässrigen Medium, und ein Trennen der nicht-cellulosischen Fasern von den cellulosischen Fasern aufgrund unterschiedlicher physikalischer Eigenschaften in dem flüssigen Medium (insbesondere unterschiedlichen gravitativen, zentrifugalkraftbezogenen, flotativen und/oder elektrostatischen Eigenschaften) aufweisen. Wenn die unterschiedlichen Fasern in einem flüssigen Medium aufgrund ihrer unterschiedlichen Zusammensetzung unterschiedliches Verhalten zeigen, erlaubt auch dies ein Auftrennen der unterschiedlichen Faserbestandteile.

Gemäß einem Ausführungsbeispiel kann das flüssige Medium mindestens einen Zusatz zum Verstärken der unterschiedlichen physikalischen Eigenschaften aufweisen, insbesondere ein Dispergiermittel und/oder ein Quellungsmittel. Unter einem Dispergiermittel oder Dispergatoren können insbesondere Additive verstanden werden, die das Dispergieren, also eine Feinverteilung eines Stoffes (zum Beispiel einer Faser) in einem kontinuierlichen Medium (zum Beispiel in einer Flüssigkeit) ermöglichen oder stabilisieren. Unter einem Quellungsmittel können insbesondere Additive verstanden werden, die ein Quellen einer Substanz fördern. Unter Quellen kann ein Vorgang verstanden werden, bei dem ein Stoff (insbesondere eine Flüssigkeit) in einen Festkörper eindringt und eine Volumenvergrößerung des Letzteren bewirkt. Wenn dem Medium ein oder mehrere solche Additive zugesetzt werden, können die Diskrepanzen in den Eigenschaften der diversen Fasern, die das mechanische Auftrennen der unterschiedlichen Fasern bedingen, erhöht werden. Dies erhöht die Effizienz der Trennung.

Gemäß einem Ausführungsbeispiel kann das chemische Abtrennen ein selektives Lösen nur zumindest eines Teils der nicht-cellulosischen Fasern oder nur zumindest eines Teils der cellulosischen Fasern in einem Lösungsmittel, und ein Abtrennen, insbesondere Abfiltrieren, zumindest eines Teils der nicht gelösten Faserbestandteile aufweisen. Anders ausgedrückt können die verschiedenen Fasern einem (zum Beispiel flüssigen, insbesondere wässrigen) Medium zugeführt werden, in dem sich nur bestimmte dieser Fasern, insbesondere selektiv Polyesterfasern, ausgeprägt lösen, wohingegen andere Fasern, insbesondere Cellulosefasern, dort kein oder nur ein schwächeres Lösungsverhalten zeigen. Die sich nicht oder nicht nennenswert oder schwächer lösenden Fasern (insbesondere Cellulosefasern) können abfiltriert oder abzentrifugiert werden und können dann getrennt von den gelösten Fasern weiterverarbeitet werden.

Gemäß einem Ausführungsbeispiel kann das mechanische Abtrennen und/oder das chemische Abtrennen ein Abtrennen von synthetischen Fasern als nicht-cellulosische Fasern aufweisen. In den wiederverwerteten textilen Materialien, insbesondere Altkleider und/oder textile Abfallreste, finden sich häufig nicht-cellulosische Fasern synthetischen Ursprungs. Als Beispiel für solche synthetischen Fasern können Polyester, Polyamid und/oder Elastan genannt werden. Diese können mit den hier beschriebenen Verfahren wirksam von Cellulosefasern getrennt werden.

Gemäß einem Ausführungsbeispiel kann das chemische Abtrennen ein Zuführen einer alkalischen Lösung, insbesondere unter Verwendung oxidierender Agenzien, aufweisen, insbesondere eine alkalische Kochung (z.B. in NaOH). Insbesondere kann das Zuführen der alkalischen Lösung zum Abbauen nicht-cellulosischer Fasern, insbesondere synthetischer Fasern, weiter insbesondere von Polyesterfasern, erfolgen. Besonders Polyester kann dadurch in wasserlösliche Konstituenten gespalten werden, welche mittels den im Prozess anfallenden Abwässern von den Cellulosefasern abgetrennt werden können.

Gemäß einem weiteren Ausführungsbeispiel werden die nicht-cellulosischen Fremdstoffe, insbesondere synthetische Fasern, zumindest teilweise in dem zweiten Ausgangsstoff behalten. Dies kann den Vorteil haben, dass bestimmte vorteilhafte Eigenschaften (z.B. Stabilität, Dehnbarkeit, Elastizität, Haltbarkeit) in dem erhaltenen (aufbereiteten) Mischausgangsstoff bzw. dem herzustellenden Formkörper bereitgestellt werden können. In einem Ausführungsbeispiel können synthetische Fasern (z.B. Polyester, aber auch Polyurethan, insbesondere Elastan, oder Polyamid) zumindest teilweise in dem zweiten Ausgangsstoff behalten werden.

Gemäß einem weiteren Ausführungsbeispiel weist das Verfahren ferner auf: teilweises Abreichern (insbesondere selektives Abreichern) der nicht-cellulosischen Fremdstoffe von der Cellulose derart, dass zumindest ein vordefinierter synthetischer Kunststoff in dem abgereicherten zweiten Ausgangsstoff zumindest teilweise verbleibt (insbesondere derart, dass der gebildete Formkörper vordefinierte Eigenschaften aufweist). Dies hat den Vorteil, dass Eigenschaften des aufbereiteten Mischausgangsstoffs, und damit auch des herzustellenden Formkörpers, gezielt und auf einfache Weise gesteuert werden können, während gleichzeitig der Abreicherungsprozess weniger komplex aufgeführt werden kann. Erstaunlicherweise wurde gefunden, dass durch gezielte Steuerung von Restkonzentrationen im Rahmen des Aufbereitungsverfahrens (also der Aufbereitung bzw. des Vorbereitens der Alttextilien) neue Eigenschaften in dem aufbereiteten Mischausgangsstoff bzw. dem herzustellenden Formkörper erreicht werden können.

Insbesondere lassen sich durch einen gezielten Anteil von Residualpolymeren (bevorzugt Polyurethane, wie z.B. Elastan) eine Kompensation (Erhöhung durch den Elastananteil, Reduktion durch Altcellulose) der Festigkeitswerte erreichen, welche normalerweise durch Beimischung von rezyklierter Cellulose deutlich vermindert wären, da mit dem Recyclingprozess eine Reduktion der mittleren Kettenlänge einhergeht.

In einem weiteren Ausführungsbeispiel wird durch die Aufbereitung des zweiten Ausgangsstoffs sichergestellt, dass die verbleibenden Restpolymere (z.B. PU, PA, PET, Polyester usw.) in einer geeigneten Konzentration (bzw. Abreicherung) vorliegen (wobei kein vollständiger Abbau nötig sein muss), so dass neben textiltypischen Verarbeitungsformen auch eine Eignung für eine Binderbasierende Weiterverarbeitung vorliegt. Insbesondere können die residualen nicht-Cellulose Rückstände als Ersatz von naturgemäss fehlender Hemicellulose in Alttextilien wirken und einen allfälligen Binderanteil bei der Herstellung von cellulosischen Formkörpern, insbesondere bei Papierprozessen, reduzieren. Die gezielte Steuerung dieser Anteile im Rahmen des Verfahrens kann eine entsprechende Voroptimierung der resultierenden Qualität des zu erzeugenden cellulosischen Formkörpers bewirken.

Gemäß einem weiteren Ausführungsbeispiel weist das Aufbereiten ferner auf: Durchführen eines Koch-Prozesses. Dies kann z.B. ein Sulfat-Prozess und/oder ein Sulfit-Prozess sein. Ferner kann der Koch-Prozess auch ein Organosolv Prozess (insbesondere gamma-Valerolacton Prozess) sein. Dies hat den Vorteil, dass effiziente und etablierte Verfahren direkt angewendet werden können.

Besonders überraschend ist hierbei die Erkenntnis, dass ein (zumindest teilweises) gemeinsames Kochen von einem lignocellulosischen Rohstoff wie Holz und Lignin-freien Produkten wie Textilien nicht nur möglich ist, sondern auch Vorteile bezüglich der Eigenschaften von Mischausgangsstoff/Formkörper bringt.

Der Koch-Prozess kann ein mehrstufiger Koch-Prozess sein. Beispielsweise kann der Koch-Prozess auch eine Vorhydrolyse umfassen.

Im Rahmen dieses Dokumentes kann unter dem Begriff "Alkalische Aufschlussverfahren" verstanden werden, dass der pH-Wert im Prozess alkalisch also pH>7 ist.

Ein gebräuchliches alkalisches Aufschlussverfahren ist der Kraft- oder Sulfatprozess. Die dabei aktiven Aufschlusschemikalien sind die Hydroxid- und Hydrogensulfid-Ionen OH- und HS-. Zur Herstellung der Kochlauge werden im wesentlichen Natriumsulfid (Na₂S) und Natronlauge (NaOH) verwendet.

Insbesondere zur Herstellung von hochreinen Chemiezellstoff, welcher zur Herstellung (insbesondere regenierter) cellulosischer Formkörper eingesetzt wird, wird der eigentlichen Sulfatkochung häufig ein sogenannter Vorhydrolyseschritt vorangestellt. In diesem Schritt werden Hemicellulosen aus dem lignocellulosischen Rohstoff in leicht lösliche Formen überführt und können dadurch von der Cellulose abgetrennt werden. Trotz des eigentlich alkalischen Aufschlussprozesses findet die Vorhydrolyse im sauren pH-Bereich ab. Der erforderliche pH-Wert kann durch gezielte Zugabe von Säuren, oder auch durch Freisetzung (mit Dampf) der im lignocellulosischen Rohstoff selbst enthaltenen organischen Säuren eingestellt werden.

Ein weiteres alkalisches Verfahren ist der Soda-Aufschluss. Hier wird NaOH als hauptsächliche Chemikalie eingesetzt. In allen alkalischen Verfahren können Katalysatoren wie z.B. Anthrachinone oder geringe Mengen von weiteren Kochhilfsstoffen eingesetzt werden wie z.B. Tensiden.

Ein Sulfat-Prozess wird auch als Sulfat-Aufschluss oder -verfahren bezeichnet, bzw. wegen der festeren Fasern auch als Kraft-Verfahren. Die aktiven Substanzen können Natronlauge und Natriumsulfid sein (Natriumsulfat (Na₂SO₄) kann für die Rückgewinnung verwendet werden). Der Ausgangsstoff (z.B. Holzschnitzel und/oder Alttextilien) kann mit der Kochlauge imprägniert und einer Reaktorvorrichtung (Kocher) zugeführt werden. Bei einer Temperatur von beispielsweise bis zu 170° C können Holzbestandteile, wie Hemicellulosen und Lignine, alkalisch gelöst werden. Ein Abbau der Cellulosefasern kann hierbei unerwünscht sein. Insbesondere zur Herstellung hochreiner Chemiezellstoffe kann der eigentlichen Sulfatkochung ein Vorhydrolyseschritt vorangestellt sein.

Für einen Sulfit-Prozess kann z.B. flüssiges Schwefeldioxid verwendet werden. Der saure Sulfit-Prozess kann den Verbund zwischen Lignin und Cellulose durch Sulfonierung und Etherspaltung des Lignins lösen. Der Sulfit-Prozess kann z.B. als Calciumbisulfit (Calciumhydrogensulfit) oder als Magnesiumbisulfit (Magnesiumhydrogensulfit) Prozess durchgeführt werden.

In einem weiteren Ausführungsbeispiel kann der Koch-Prozess mittels eines Organosolv-Prozesses, insbesondere mit einer wässrigen Lösung von gamma-Valerolacton (GVL) als gamma-Valerolaction Prozess durchgeführt werden.

Organosolv-Kochungen sind dadurch gekennzeichnet, dass ein organisches Lösungsmittel wie z.B. Methanol oder Ethanol in größeren Mengen als wesentliche Aufschlusschemikalie zur Ligninentfernung eingesetzt wird. Diese Prozesse können sowohl im alkalischen Milieu stattfinden wie das ASAM-Verfahren oder im sauren Milieu wie das säure katalysierte Milox- oder Formacell-Verfahren. Die Anlagen müssen explosionsgeschützt sein und die Rückgewinnung des Lösungsmittels erfolgt über einfache Destillation.

Ein Beispiel aus der Gruppe der Organosolv-Verfahren ist die Fraktionierung mit einem Gemisch aus gamma-Valerolacton und Wasser. Mit diesem Prozess kann Lignin aus dem ersten Ausgangsstoff sehr effizient in Lösung gebracht werden, ohne die Cellulose zu stark abzubauen. Gleichzeitig kann bei gemeinsamer Kochung von dem ersten Ausgangsstoff mit dem zweiten Ausgangsstoff ein Großteil der Farbstoffe und Textilhilfsstoffe ebenfalls durch GVL entfernt und in Lösung gebracht werden (aufgrund ihrer strukturellen Ähnlichkeit zu Lignin), ohne die Cellulose im zweiten Ausgangsstoff zu stark zu schädigen. Somit kann der Koch-Prozess deutlich effizienter und ressourcenschonender ablaufen, und der Ausgangsstoff wird weniger stark geschädigt. Ferner kann ein nachfolgender Bleich-Prozess schonender betrieben werden, da Farbstoffe bereits beim Koch-Prozess zum Grossteil entfernt werden können. Mögliche Kochparameter sind z.B. eine Kochtemperatur von 140-180°C mit 35-75 wt% GVL in Wasser, bei einer Kochzeit von 50-180 min. Ein weiterer Vorteil des Koch-Prozesses mit GVL kann in der einfachen Rückgewinnung der Prozesschemikalie GVL liegen.

Obwohl die beschriebenen Prozesse für den Ligninaufschluss (Trennen von Cellulose und Lignin) konzipiert sind, hat es sich überraschend gezeigt, dass alle drei Prozessarten geeignet sind, sowohl einen Holzstoff als auch Alttextilien fasergerecht aufzuschließen bzw. freizulegen und nicht-Cellulosische Bestandteile abzutrennen.

In einem Ausführungsbeispiel erfordern sowohl die Art und Menge der einzusetzenden Reagenzien (z.B. NaOH, MgHSOs, Na₂S), der pH-Wert, der sich im Reaktionsfortschritt ändern kann, aber auch Temperatur und Druckverhältnisse, sowie Reaktionszeiten, im Wesentlichen keine Adaptierung gegenüber den bekannten und bewährten Holzaufschlussverfahren.

Somit kann das beschriebene Verfahren in bestehenden Anlagen unter weitgehendster Berücksichtigung von bestehenden und bewährten Verfahrensschritten und unter Beibehaltung der bisherigen Vorkehrungen für geschlossene Kreisläufe (Umweltschutzaspekte) implementiert werden kann. Dies ist vor Allem deshalb von besonderem Interesse, weil dadurch die bereits in Betrieb befindlichen Anlangen und Systeme, welche allfälligen Auflagen, Reach-Standards und möglichen Betriebsgenehmigungen entsprechen, so mit nur minimalen Anpassungen/Änderungen weiterbetrieben werden können.

Insbesondere synthetische Fasern (und andere nicht-Faser Fremdstoffe) können mit dem beschriebenen Prozess abgetrennt werden. Diese Abtrennung (z.B. PET, PA6.6, PA 6, optische Aufheller, Gleitmittel an der Textilverarbeitung) kann in vielen Fällen einfacher und schneller als der eigentliche Lignin-Aufschluss aus dem Holzstoff sein. Es hat sich gezeigt, dass die synthetischen Fasern (polymeren Bestandteile) der Textilien (zumindest teilweise) abgebaut werden können, z.B. jeweils auf unter 1000 ppm, bei geeigneter Prozessführung auf unter 100 ppm. Dies kann gemäß den unten aufgeführten Beispielen geschehen, hier am Beispiel des Sulfat-Prozesses (alkalische Bedingungen) skizziert

PET: Verseifung (Hydrolyse) in Terephthalsäure (TPA) und Ethylenglykol, wobei Ethylenglykol weitgehend oxidiert wird. TPA kann aus der Lauge durch Ansäuerung rückgewonnen werden.

PP (Polypropylen): Oxidation, insbesondere an den tertiären Kohlenstoffatomen, zu Polymerbruchstücken (Hydroxyl- oder Carboxylgruppen). Diese Bruchstücke können im alkalischen Medium wasserlöslich sein.

PAN (Polyacrylnitril): Verseifung, im Wesentlichen im alkalischen Medium zu Polyacrylamid. Dieses ist wasserlöslich und führt, bei entsprechender Konzentration durch Wasserstoffbrücken, zu einer spürbaren Viskositätserhöhung. Dies kann zu einer Stabilisierung des inhomogenen Kocher-Inhalts führen und kann weiterhin Feinteile (z.B. Pigmente, Füllstoffe, Mattierungsmittel auf anorganischer Basis wie TiO, ZnO, SiOz) in Schwebe halten.

PUR (Polyurethan)/Elastan: Verseifung unter gegebenen alkalischen Umständen. Die für Elastan typischen Polyglykol-Blockanteile werden ebenfalls verseift bzw. gehen bei einer gleichzeitigen Oxidation mit Sauerstoff in kleinmolekulare Bruchstücke über.

PA6.6 und PA6 (Polyamid): Verseifung zu Dicarbonsäuren und Aminen, bzw. Aminocarbonsäuren, wobei diese Substanzen wasserlöslich sind.

Optische Aufheller: Werden durch Reaktion zu Sulfosäurensalzen wasserlöslich.

Organische Pigmente/Farbstoffe: Werden entweder abgebaut oder als Feinteile freigesetzt, die durch die nachfolgende Filtration nicht zurückgehalten werden.

Ein besonderer Vorteil des beschriebenen Verfahrens kann darin liegen, dass eine Reihe von Inhaltsstoffen der Alttextilien bzw. deren Abbauprodukte (insbesondere Polyester) mit typischen Molekülbauteilen des Lignins (z.B.: -OH, - CO-, -COOH) in Interaktion treten und damit nachhaltig vom erwünschten Zellstoff (der Cellulose) getrennt werden.

In anderen Worten beschrieben wird in einem Ausführungsbeispiel vorgeschlagen (Alt-)Textilien aller Art, also auch jene mit Anteilen an Polymerfasern und/oder Wolle, nicht nur, wie derzeit üblich, mittels wässriger Natronlauge (NaOH) bei Kochtemperatur zu behandeln, sondern jenen Prozessen zu unterwerfen, die zur Trennung von Lignin (und anderen Bestandteilen) von Zellstoffen aus pflanzlichen Rohstoffen, Anwendung führen. Solche sind Kochungen nach dem Sulfat-Prozess mittels wässrigen NaOH, Na₂S, dem Sulfit-Prozess mittels wässrigen Ca/Mg-Bisulfit, oder einem Organosolv-Prozess, jedoch dadurch gekennzeichnet, dass dieser Aufschluss gemeinsam mit einem Holzanteil (insbesondere von etwa 10% bis 99% (bezogen auf Gesamtgewicht der festen Massen)) ausgeführt wird.

Im Folgenden werden einige weitere Ausführungsbeispiele des Aufbereitungsprozesses beschrieben.

Gemäß einem weiteren Ausführungsbeispiel weist das Aufbereiten auf: Durchführen eines Bleich-Prozesses (insbesondere nach dem Koch-Prozess). Dies hat den Vorteil, dass auf flexible Weise weitere Aufbereitungsprozesse dem Kochen nachgeschaltet werden können.

Insbesondere nach dem Koch-Prozess können die freigelegten Cellulose-Fasern abfiltriert, gewaschen und alkalisch/sauer gebleicht werden. Als Bleichen kann ein Prozess bezeichnet werden, welcher unerwünschte Färbungen entfernt oder abschwächt. Beim Bleichen kommen Bleichmittel zum Einsatz, bei welchen es sich um oxidierende oder reduzierende Verbindungen handelt, welche zumindest teilweise selektiv sein sollten. Beispielsweise können Bleichmittel farbgebende Substanzen angreifen, indem sie die Chromophore zerstören. Als Bleichmittel können z.B. Sauerstoff, Ozon, Wasserstoffperoxid, Chlor-Verbindungen (z.B. Chlordioxid oder Hypochlorit), aber auch Enzyme verwendet werden.

Das Bleichen kann zumindest eines aus einer Gruppe aufweisen, die besteht aus einem oxidativen Bleichen, einem reduktiven Bleichen und einem enzymatischen Bleichen. Gemäß einem bevorzugten Ausführungsbeispiel der Erfindung kann das Bleichen ein Durchführen einer sauren Wäsche, gefolgt vom Durchführen einer Ozonbleiche, wiederum gefolgt vom Durchführen einer Peroxidbleiche aufweisen. Durch das Bleichen können Farbstoffe und andere chemische Reststoffe in den wiederverwerteten Textilmaterialien entfernt werden.

Eine Bleichlinie kann mehrstufig sein und das Zusammenmischen kann in jeder Stufe erfolgen. Beispielsweise: i) eine Sulfit-Kochung des ersten Ausgangsstoffs mit anschließender O-Delignifizierung, und ii) parallel dazu ein Textilaufschluss ohne O-Delignifizierung (weil kein Lignin in Baumwolle) und dann iii) gemeinsame Bleiche zur Erreichung des Endweißgrads.

Gemäß einem weiteren Ausführungsbeispiel weist das Aufbereiten auf: Durchführen eines Reinigungsprozesses. Dem Fachmann sind eine Vielzahl von Reinigungsschritten bekannt, welche durchgeführt werden können, um eine erwünschte Reinheit des Mischausgangsstoffs bereitzustellen.

Gemäß einem weiteren Ausführungsbeispiel weist das Aufbereiten auf: Durchführen eines Trocknungsprozesses des aufbereiteten Mischausgangsstoffs, insbesondere einer Mischzellstoff-Pulpe.

Gemäß einem weiteren Ausführungsbeispiel weist das Aufbereiten auf: Zuführen (insbesondere druckbeaufschlagt) eines Oxidationsmittels (insbesondere Sauerstoff) in den Koch-Prozess.

Durch die prozessbedingte Einfachheit der Steuerung der Sauerstoffzuführung kann schnell und präzise auf Messparameter reagiert werden, welche den Abbaugrad der unerwünschten Ausgangsstoff-Zusatzbestandteile messen.

Einige Fremdstoffe (z.B. PP, PUR, PAN, Elastan, Direktfärbpigmente) können sich als stabil erweisen und können vorteilhaft mittels Zusatzoxidation mit Sauerstoff während des Koch-Prozesses in der vorgegebenen Zeit abgebaut werden.

In besonders hartnäckigen Fällen kann ein Zusatz von elementarem Schwefel (z.B. 8 bis 10 kg/Tonne) einen zusätzlichen Oxidationseffekt auslösen. Der entstehende Schwefelwasserstoff (H₂S) kann im alkalischen Medium gebunden werden.

Gemäß einem exemplarischen Ausführungsbeispiel ist man in der Papierindustrie auf der permanenten Suche nach Deinking-Verfahren mit möglichst wenig zusätzlichen aggressiven Chemikalien. Dieses sogenannte Deinking wird im erfindungsgemässen Verfahren implizit erreicht. Durch die Kochung, insbesondere eine Heißkochung mit zusätzlichem Sauerstoff, werden die textilen Farbrestbestandteile in hohem Masse derart aufgelöst, dass dies auch wie ein Deinking-Verfahren wirkt. Dieses spezielle Deinking findet aber ohne zusätzliche chemische oder physikalische Massnahmen statt, da die eingesetzten Chemikalien und Prozesse zum Aufschluss der zu recycelnden Alttextilien bereits zwingend benötigt werden. Des Weiteren basieren in der Papierindustrie Deinking-Verfahren auf Sortierung und Flotation zur Entfernung von Druckfarbe. Diese Prozesse werden im Standardprozess der Voraufbereitung von Alttextilien zur Rückgewinnung von Zellstoff ebenfalls standardmässig angewendet. Dies führt bei der Vermengung einer derart hergestellten Cellulose mit Cellulose aus dem Papierrecycling bei entsprechenden Randbedingungen zu einem zusätzlich weisseren Zellstoffmix und somit zu einem weisseren Papier, was zusätzlich die nachfolgenden Bleichschritte reduziert.

Gemäß einem weiteren Ausführungsbeispiel weist das Aufbereiten auf: Erhöhen des Drucks während des Koch-Prozesses über den Atmosphärendruck. Hierdurch kann der Koch-Prozess (insbesondere die Oxidation) besonders effizient durchgeführt werden.

Gemäß einem weiteren Ausführungsbeispiel weist das Aufbereiten auf: Mischen des ersten Ausgangsstoffs und des zweiten Ausgangsstoffs derart, dass der Anteil des ersten Ausgangsstoffs in dem Bereich 1 bis 99% (insbesondere 5 bis 90%, weiter insbesondere 10 bis 80%), insbesondere 10 bis 99 %, bezogen auf das Gesamtgewicht der festen Massen liegt.

In einer weiteren bevorzugten Ausführungsform kann zu parallel geführten Kochungen zurückgegriffen geben, die mit jeweils unterschiedlichen Mischungsverhältnissen von Textil:Holz von 1:99 bis 99:1 betrieben werden. Die Stoffströme, nach beendetem Aufschluss, werden in der Folge, vor oder nach der Abtrennung der Rohcellulose (Braunstoff), jedenfalls aber vor einer gemeinsamen Bleichung, zusammengeführt.

Gemäß einem weiteren Ausführungsbeispiel weist das Aufbereiten auf: Mischen des ersten Ausgangsstoffs in Form einer flüssigen Cellulosesuspension mit dem zweiten Ausgangsstoff in Form einer flüssigen Cellulosesuspension. Dies hat den Vorteil, dass die Mischung besonders effizient durchgeführt werden kann.

Hierbei kann ein Zusammenführen der beiden flüssigen Cellulose-Fraktionen aus einer ersten Kochung des ersten Ausgangsstoffs und einer zweiten Kochung des zweiten Ausgangsstoffs durchgeführt werden. Diese Variante setzt eine vorgängige, zumindest teilweise, separate Kochung der Holz- und der Textil-Fraktion voraus. In einer Variante dieser Ausführungsform werden flüssige Cellulose-Fraktionen aus vorgängiger gemeinsamer Kochung verwenden, welche aber unterschiedliche Holz-, bzw. Textilanteile enthalten.

Gemäß einem weiteren Ausführungsbeispiel weist das Aufbereiten auf: Durchführen des Koch-Prozesses derart, dass der durchschnittliche Polymerisationsgrad der Cellulose innerhalb eines vordefinierten Bereichs ist.

Insbesondere weist die Cellulose einen durchschnittlichen Polymerisationsgrad von 200 Monomeren oder mehr, weiter insbesondere 300 Monomeren oder mehr, weiter insbesondere 500 Monomeren oder mehr, auf. Die Cellulose weist 10% oder weniger Cellulose mit einem durchschnittlichen Polymerisationsgrad in dem Bereich 50 bis 200 Monomere auf. Dies hat den Vorteil, dass besonders hochwertige Cellulose, z.B. für die Papierherstellung, bereitgestellt werden kann.

Im Rahmen dieses Dokuments kann unter dem Begriff "Polymerisationsgrad" die Anzahl der Grundbausteine (Monomere) pro Polymermolekül (z.B. Cellulose Molekül) verstanden werden. Der Polymerisationsgrad kann identisch mit dem Quotienten der mittleren molaren Masse des Polymers und der molaren Masse seiner Wiederholeinheit (der Monomereinheit) sein. Die genaue Zahl kann, außer bei Proteinen, meist nur ein Mittelwert über die betrachtete Probe sein. Dieser Mittelwert wird als durchschnittlicher Polymerisationsgrad (DP) bezeichnet. Der Polymerisationsgrad sowie die raumgeometrische Verteilung der Monomere im Molekül (d.h. die stereochemische Anordnung der Molekülzweige) können großen Einfluss auf die physikalischen und besonders auf die mechanischen Eigenschaften eines Polymers besitzen. Der DP beträgt z.B. für Baumwolle etwa 3000, für Viskosefasern 250 bis 700, für Polyamide 100 bis 180 und für Polyester 130 bis 220.

Bei dem selektiven Abreichern kann Cellulose mit einer kurzen Kettenlänge bewusst dem Ausgangsstoff entzogen werden, so dass die Cellulose des Ausgangsstoffs einen durchschnittlichen Polymerisationsgrad in einem vordefinierten Bereich aufweist. Beispielsweise kann eine mechanische Trennung, insbesondere eine Dichtetrennung, durchgeführt werden, um die kürzeren (leichteren) Cellulose Polymere von den längeren (schwereren) Cellulose Polymeren abzutrennen.

Ein Vorteil dieses Verfahrens ist es, dass derartige Kurzketten zu wasserlöslichen Oligomeren abgebaut werden. Sie verhalten sich in einer gewissen Analogie, wie die Hemicellulosen aus den Holzsegmenten.

Gemäß einem weiteren Ausführungsbeispiel weist das Aufbereiten auf: Durchführen eines Enzym-Prozesses. Eine Enzymbehandlung mit Enzymen wie Proteasen, Mannasen, usw. erlaubt es, unerwünschte Bestandteile, wie Peptidreste, Hemicellulosen usw. abzubauen. Vorteilhaft kann der Enzym-Prozess an dem Mischausgangsstoff nach der Kochung (z.B. auf etwa 60 Grad abgekühlt) durchgeführt werden.

Gemäß einem weiteren Ausführungsbeispiel weist das Aufbereiten auf: Durchführen eines kontinuierlichen Prozesses, insbesondere aufweisend: i) kontinuierliches Bereitstellen des ersten Ausgangsstoffs und/oder kontinuierliches Bereitstellen des zweiten Ausgangsstoffs, ii) kontinuierliches Mischen des ersten Ausgangsstoffs und des zweiten Ausgangsstoffs, und iii) zumindest teilweise gemeinsames kontinuierliches Aufbereiten des Mischausgangsstoffs. Dies kann den Vorteil bereitstellen, dass das Verfahren langfristig stabil betrieben werden kann.

Im Rahmen dieses Dokuments kann unter dem Begriff "kontinuierlich" insbesondere verstanden werden, dass ein technischer Prozess ohne Unterbrechungen abläuft. In anderen Worten kann ein (kontinuierlicher, "steady state") lang andauernder Stofffluss (welcher zumindest die Schritte i) Zufuhr, ii) Aufbereitung, und iii) Abfuhr aufweist) stattfinden, welcher im Wesentlichen nicht unterbrochen wird. Im Gegensatz hierzu wird ein diskontinuierlicher Prozess ständig unterbrochen, denn ein Aufbereiten erfolgt hier Batch (bzw. Chargen)-weise. Bei dem kontinuierlichen Prozess können Zufuhr und Abfuhr ebenfalls kontinuierlich ablaufen. Beispielsweise kann eine Kochvorrichtung zumindest teilweise rohrförmig ausgebildet sein, so dass zu einer ersten Öffnung kontinuierlich Ausgangsstoff zugeführt wird, und aus einer zweiten Öffnung kontinuierlich aufbereiteter Ausgangsstoff abgeführt werden kann, während dazwischen kontinuierlich aufbereitet und dabei weitergeschoben (z.B. mittels einer Förderschnecke) wird.

In einem kontinuierlichen Prozess können die Verhältnisse des ersten Ausgangsstoffs und des zweiten Ausgangsstoffs ständig verändert werden, denn im Gegensatz zu einer Batch-Produktion können diese Mischverhältnisse aufgrund von Messergebnissen dynamisch variiert werden.

Gemäß einem weiteren Ausführungsbeispiel weist das Mischen ferner auf: Mischen des ersten Ausgangsstoffs und des zweiten Ausgangsstoffs zu einem der folgenden Zeitpunkte: i) vor einer Vorhydrolyse, ii) vor dem Koch-Prozess, iii) während des Koch-Prozesses, iv) nach dem Koch-Prozess, v) vor dem Bleich-Prozess, vi) während einer Bleich-Sequenz, viii) nach dem Bleich-Prozess, ix) vor einer Trocknung. Mit dem Festlegen eines bestimmten Mischzeitpunkts können erwünschte vorteilhafte Prozessbedingungen und/oder Eigenschaften des Mischausgangsstoffs gezielt gesteuert werden. Insbesondere durch verschieden lange Verweilzeiten in dem Koch-Prozess und/oder in einem Nachfolge- (z.B. Bleich) Prozess können Parameter wie die Cellulose Kettenlänge (Polymerisationsgrad) effizient beeinflusst werden.

In einem Ausführungsbeispiel werden der erste Ausgangsstoff und der zweite Ausgangsstoff zunächst getrennt voneinander aufbereitet. Beispielsweise kann jeder Ausgangsstoff zunächst einer eigenen Kochung unterzogen werden, deren Bedingungen genau auf diese Stoffzusammensetzung zugeschnitten sind. Diese Parallelkochungen können in unterschiedlicher Verfahrensweise (z.B. Sulfat- oder Sulfit-Prozess, Organosolv, mit oder ohne O₂-Delignifizierung, usw.) betrieben werden. In diesem Beispiel können nach Abtrennung der Rohcellulose die Ablaugen in bekannter Weise (z.B. Rückgewinnung von Wertstoffen, Verbrennung zur Energiegewinnung, usw.) aufbereitet werden. Der Koch-Prozess kann auch mehrstufig sein, und die Mischung kann während einer bestimmten Stufe des mehrstufigen Koch-Prozesses stattfinden.

In einem Ausführungsbeispiel können die aus den Ausgangsstoffen erhaltenen aufbereiteten Ausgangsstoffe (beispielsweise Rohcellulose-Fraktionen) einer gemeinsamen Bleiche zugeführt werden. Als besondere optionale Variante dieser Ausführungsform kann für den ersten Ausgangsstoff und für den zweiten Ausgangsstoff ein unterschiedlicher Zuführungszeitpunkt in einem Nachfolge-Prozess, z.B. einem Bleich-Prozess, gewählt werden. Dies kann für beide Ausgangsstoff-Fraktionen eine Optimierung der gegenläufigen Eigenschaften erlauben. Einerseits kann durch die Expositionsdauer der Fraktionen in der Bleiche der Bleichungsgrad gesteuert werden (idealerweise lange Bleichdauer, so dass eine hohe Bleichwirkung erreicht wird). Andererseits aber wird durch eine lange Expositionsdauer in der Bleiche der Kettenabbau beschleunigt. Durch die Möglichkeit der unterschiedlichen Zuführungszeitpunkte lassen sich diese qualitätsbestimmenden Parameter optimieren.

Gemäß einem weiteren Ausführungsbeispiel weist das Mischen ferner auf: Zuführen des ersten Ausgangsstoffs zu dem Koch-Prozess und danach Zuführen des zweiten Ausgangsstoffs zu dem Koch-Prozess (insbesondere wenn der zweite Ausgangsstoff einen geringen Anteil an nicht-cellulosischen Fremdstoffen aufweist). Dies hat den Vorteil, dass die Alttextil-Fraktion dem Aufbereitungsprozess weniger lange ausgesetzt werden muss, wodurch insbesondere eine längere Cellulose Kettenlänge erreicht werden kann.

Gemäß einem weiteren Ausführungsbeispiel weist das Mischen ferner auf: Zuführen des zweiten Ausgangsstoffs zu dem Koch-Prozess und danach Zuführen des ersten Ausgangsstoffs zu dem Koch-Prozess (insbesondere wenn der zweite Ausgangsstoff einen hohen Anteil an nicht-cellulosischen Fremdstoffen aufweist). Dies hat den Vorteil, dass eine Alttextil-Fraktion, welche einen besonders hohen Anteil an nicht-cellulosischen Fremdstoffen, insbesondere synthetische Fasern, aufweist, einem längeren und damit effizienteren Aufbereitungsprozess zugeführt wird.

In einem Ausführungsbeispiel kann eine Vorausanalyse des Ausgangsstoffs gemacht werden. Zeigt sich dabei die Anwesenheit von besonders niedrigen Konzentrationen oder leicht abbaubaren Anteilen (z.B. von PET, PA6.6, PA6, PAN, PUR/Elastan, PP, optischen Aufhellern oder Gleitmitteln aus der Textilverarbeitung) kann es vorteilhaft sein, die Alttextilkleinteile erst zu einem späteren Zeitpunkt dem Koch-Prozess zuzuführen. Dieser Zuführungszeitpunkt kann dahingehend optimiert werden, dass dadurch erreicht wird, dass die Anzahl ungewollter Kettenbrüche minimiert wird. Dasselbe lässt sich auch in die umgekehrte Richtung optimieren: Bei besonders hoher Fremdmaterialbelastung des Ausgangsstoffs kann auch der Holzstoff später hinzugefügt werden, dies wiederum mit demselben Optimierungsziel der Kettenlängenmaximierung.

Gemäß einem weiteren Ausführungsbeispiel weist das Bereitstellen des zweiten Ausgangsstoffs auf: Einstellen einer im Wesentlichen vordefinierten Zusammensetzung, wobei das Einstellen aufweist: i) selektives Anreichern zumindest einer Zusammensetzungskomponente und/oder ii) selektives Abreichern zumindest einer Zusammensetzungskomponente. Dies hat den Vorteil, dass erwünschte Eigenschaften des zweiten Ausgangsstoffes, des Mischausgangsstoffs oder des herzustellenden Formkörpers gezielt gesteuert werden können.

Im Rahmen dieses Dokuments kann unter dem Begriff "vordefinierte Zusammensetzung" insbesondere ein Anteil bzw. eine Konzentration von zumindest zwei Zusammensetzungskomponenten innerhalb eines Ausgangsstoffs verstanden werden. Beispielsweise kann der Ausgangsstoff ein Alttextil sein und die Komponenten können Cellulosefasern und synthetische (Kunststoff) Fasern sein. In diesem Fall kann die Konzentration bzw. ein Konzentrationsbereich jeweils für Cellulosefasern und synthetische Fasern vordefiniert werden, um somit eine vordefinierte Zusammensetzung bereitzustellen. Die definierte Zusammensetzung kann hierbei absolute Werte oder Wertebereiche umfassen.

In einem Ausführungsbeispiel können besonders gute Ergebnisse erreicht werden, wenn der Ausgangsstoff in Bezug auf seine Zusammensetzung sortiert wurde. So können cellulosische Formkörper hergestellt werden, welche einen Anteil von > 1% (insbesondere < 10%) an Naturfasern (Baumwolle) enthalten, wobei die mittlere Kettenlänge des aus dem Rezyklat stammenden Zellstoffanteils über 300 Glukoseeinheiten liegt, und wobei jeweils pro Polymerfasertyp < 5% Anteile von synthetischen Polymerfasern enthalten sind.

In einem Ausführungsbeispiel werden verschiedene Ausgangsstoffe (Rohrezyklate) von unterschiedlicher Zusammensetzung derart gemischt, dass sich die gewünschten Anteile der unterschiedlichen Kunststoffe und weiteren Zusatzbestandteilen ergeben. Diese chemiereduzierte/chemiefreie Ausführungsvariante (nur durch Mischung von Rohrezyklaten erreicht) ist vom Ressourcenverbrauch und aufgrund von ökologischen Aspekten her besonders interessant. Die aus einer derartigen Mischung hergestellten cellulosischen Formkörper sind so trotz variabler Rohrezyklatqualität von konstanter Qualität in Bezug auf die resultierenden Endeigenschaften und die erfindungsgemässe Abreicherung im Rahmen des Koch-Prozesses.

Gemäß einem weiteren Ausführungsbeispiel weist das Bilden des cellulosischen Formkörpers aus dem aufbereiteten Ausgangsstoff eines auf aus der Gruppe welche besteht aus: einem Direktlöseverfahren, insbesondere Lyocellverfahren, einem Viskoseverfahren (insbesondere einem Xanthogenatverfahren, einem Carbamatverfahren oder einem Kaltalkaliverfahren), einem Papierherstellungsverfahren. Dies kann den Vorteil bringen, dass besonders effiziente und erprobte Verfahren direkt auf den aufbereiteten Mischausgangsstoff angewendet werden können, um einen (regenerierten) cellulosischen Formkörper herzustellen.

Eine Zusammenführung beider Koch-Prozesse (erster und zweiter Ausgangsstoff) beinhaltet das Entstehen eines neuartigen Ablaugengemisches direkt im Aufschlussprozess. Diese Ablauge weist auf: i) Lignin; ii) zumindest ein Reaktionsprodukt aus einem Koch-Prozess, insbesondere einem Sulfat-Prozess oder einem Sulfit-Prozess (oder einem Organosolv/gamma-Valerolacton Prozess), weiter insbesondere eines aus der Gruppe, welche besteht aus: Natriumsulfat, Natriumsulfid, Calciumoxid, Magnesiumoxid, und Schwefeldioxid; (optional: Cellulose mit einem im Wesentlichen geringen durchschnittlichen Polymerisationsgrad (insbesondere mit einem durchschnittlichen Polymerisationsgrad von weniger als 200 Monomeren)) und iii) zumindest eines aus der Gruppe, welche besteht aus: Baumwoll-Fasern, und synthetischen Fasern (insbesondere Kunststoff-Fasern).

Diese neue Ablauge kann als Energieerzeugungsmedium (Energieträger) eingesetzt werden, womit sowohl ein Energieproblem, als auch ein Entsorgungsproblem gelöst werden kann. Eine auch bisher geübte Praxis, die Rückgewinnung von anorganischen Reaktionsprodukten, also Natriumsulfat, Magnesiumoxid, Schwefeldioxid aus den Rauchgasen, bzw. der Asche bleibt auch mit einer solchen Prozessführung erhalten. Neuerdings werden nun aber auch die Produkte aus der Textilaufschliessung mit einbezogen, so dass die Abfallentsorgung und Energiegewinnung gleichermassen verbessert werden.

Die beschriebene Ablauge kann einen vorteilhaften, erhöhten Heizwert aufweisen. Neben Lignin, anorganischen Reaktionsprodukten und Baumharzen, kann die beschriebene Ablauge angereichert sein durch organische Bruchstücke aus Synthesefasern und Additiven, die zur Abdeckung des Energiebedarfes einer Zellstoff-Fabrik verwendet werden können.

Ferner kann die beschriebene Ablauge effizient als Chemikalien-Rückgewinnungsmedium verwendet werden.

Im Folgenden werden exemplarische Ausführungsbeispiele der vorliegenden Erfindung mit Verweis auf die folgenden Figuren detailliert beschrieben.
Figur 1 zeigt ein Flussdiagramm eines Verfahrens zum Bereitstellen eines aufbereiteten Cellulose-aufweisenden Mischausgangsstoffs gemäß einem exemplarischen Ausführungsbeispiel der Erfindung.
Figuren 2a und 2b zeigen jeweils ein weiteres Flussdiagramm eines Verfahrens zum Bereitstellen eines aufbereiteten Cellulose-aufweisenden Mischausgangsstoffs gemäß einem exemplarischen Ausführungsbeispiel der Erfindung.
Figur 3 zeigt ein Flussdiagramm eines Verfahrens zum Herstellen eines regenerierten cellulosischen Formkörpers aus dem aufbereiteten Mischausgangsstoff gemäß einem exemplarischen Ausführungsbeispiel der Erfindung.
Figur 4 zeigt eine Apparatur zum Bereitstellen des aufbereiteten Mischausgangsstoffs und zum Herstellen eines regenerierten cellulosischen Formkörpers mittels eines Lyocell-Verfahrens aus dem aufbereiteten Mischausgangsstoff gemäß einem exemplarischen Ausführungsbeispiel der Erfindung.
Figur 5 zeigt eine mittels eines Lyocell-Verfahrens hergestellte Cellulosefaser.
Figur 6 zeigt eine mittels eines Viskose-Verfahrens hergestellte Cellulosefaser.
Figur 7 zeigt eine natürliche Cellulosefaser aus einer Baumwollpflanze.

Gleiche oder ähnliche Komponenten in unterschiedlichen Figuren sind mit gleichen Bezugsziffern versehen.

Bevor bezugnehmend auf die Figuren exemplarische Ausführungsbeispiele beschrieben werden, sollen einige grundlegende Überlegungen zusammengefasst werden, basierend auf denen exemplarische Ausführungsbeispiele der Erfindung abgeleitet worden sind.

Gemäß einem exemplarischen Ausführungsbeispiel können mit dem beschriebenen Verfahren die folgenden Vorteile bereitgestellt werden:
i) Entfernen beinahe aller störenden Fremdstoffe (insbesondere Kunststoff-Fasern) durch Verseifung, Reduktion, und Abbau im Zuge des Koch-Prozesses.
ii) Ermöglichen der Nutzung herkömmlicher Industrieanlagen zur Cellulose-Gewinnung aus Holz zum Textilrecycling.
iii) Verbessern der Rührfähigkeit im Vergleich zu reiner Textilkochung.
iv) Ermöglichen von optimaler Vermischung von Rohcellulose aus Holz mit Recyclingcellulose aus Textilien, mit der Möglichkeit die gewünschte Zusammensetzung, insbesondere hinsichtlich optimaler Kettenlängen, zu generieren.
v) Erhöhen des Heizwerts der Ablauge, enthaltend Lignin, Sulfonsäure/Salz, Baumharze, jetzt angereichert durch organische Bruchstücke aus Synthesefasern und Additiven, die zur Abdeckung des Energiebedarfes einer Zellstoff-Fabrik verwendet werden kann.
vi) Für die anschließende Faserproduktion können Holzarten eingesetzt werden, die für sich alleine genommen keine ausreichende Cellulosequalität liefern. Der Anteil hochwertiger Cellulose aus Baumwolle oder cellulosischen Synthesefasern ergibt eine brauchbare Cellulosebasis.
vii) Durch allfälliges Zusammentreffen von minderen Holzqualitäten mit minderem (geschädigten) Alttextil-Fraktionen kann dennoch eine, zumindest für die Papierproduktion, geeignete Cellulosequalität generiert werden.
viii) Die gesonderte Sortierung von Alttextilien, die personell besonders aufwändig ist und, infolge der komplexeren Zusammensetzungen, nie fehlerfrei arbeiten kann, entfällt.
ix) Besonderes Ziel kann es sein, Cellulose-Pulpe auch aus Textilrecycling zur Verfügung zu stellen, die bezüglich Reinheit und ausgewogenen Kettenlängen geeignet für eine großtechnische Faserproduktion nach dem Lyocellverfahren ist.
x) Eine besondere Ausprägung des erfindungsgemässen Verfahrens kann die gemeinsame Bleichung darstellen, falls die Kochungen getrennt oder zumindest partiell getrennt durchgeführt werden.

Gemäß einem exemplarischen Ausführungsbeispiel lässt sich als spezieller Vorteil des Verfahrens die Kombination von verschiedenen Prozesselementen in einer bestehenden Anlage realisieren. Durch beispielhafte Variation der Zeitkonstanten T1 und T2, d. h. durch Variieren des Zuführungszeitpunktes der erfindungsgemässen Materialienzusammensetzungen, lässt sich die Ergebnisqualität des Verfahrens in weiten Grenzen anpassen.

Gemäß einem exemplarischen Ausführungsbeispiel können durch geeignete Prozessschritte im Rahmen des Herstellungsprozesses wie folgt die Eigenschaften des resultierenden Mischausgangsstoffs und damit des mittels eines solchen Produktes hergestellten cellulosischen Formkörpers beeinflusst werden:
i) kurze Kochdauer in NaOH (nur Alttextilien separat, nicht Holz-Fraktion) zum Erhöhen der Kettenlänge im resultierenden Zellstoff,
ii) Ausschleusung von zu kurzen Kettenlänge aus dem Produktionsprozess,
iii) Reduktion von Metalloxiden aus der Alttextil-Fraktion (Bindung, Filterung, usw.),
iv) Reduktion von synthetischen Polymeren durch Selektion des zweiten Ausgangsstoffs, Steuerung der Kochdauer, Kochtemperatur, usw. Dadurch wird erreicht, dass pro Polymerfasertyp < 5% Anteile im resultierenden Mischausgangsstoff vorhanden sind, und
v) durch Steuerung expliziter Prozessparameter (z.B. Expositionsdauer) kann die resultierende mittlere Kettenlänge maximiert werden.

Gemäß einem exemplarischen Ausführungsbeispiel variiert die Holz-Fraktion in ihrer Zusammensetzung (z.B. wenn Hölzer mit unterschiedlichen Eigenschaftsausprägungen gemischt werden). Da insbesondere bei Rohrezyklaten eine noch viel breitere Qualitätsverteilung und Zusammensetzung der einzeln Textilrezyklatkomponenten vorliegt, lässt sich dieser Gedanke im beschriebenen Verfahren einerseits für die Textil-Fraktion ebenfalls einbringen, aber zusätzlich noch dahingehend verfeinern, dass bei der Textil-Fraktion nicht nur vermischt, sondern auch aussortiert werden kann. Da diese Sortierprozesse wiederum ein Standardverfahren in der Textilrezyklat-Aufbereitung darstellen, ist solch eine aufwandsoptimale Implementation des erfindungsgemässen erweiterten Mischverfahrens möglich: i) sortierende Mischung verschiedener Textilarten aus den Rezyklattextilien oder ii) Im Rahmen desselben Prozesses aussortieren und Entfernen allfällig nicht gewünschter Nebenprodukte aus den Textilrezyklaten.

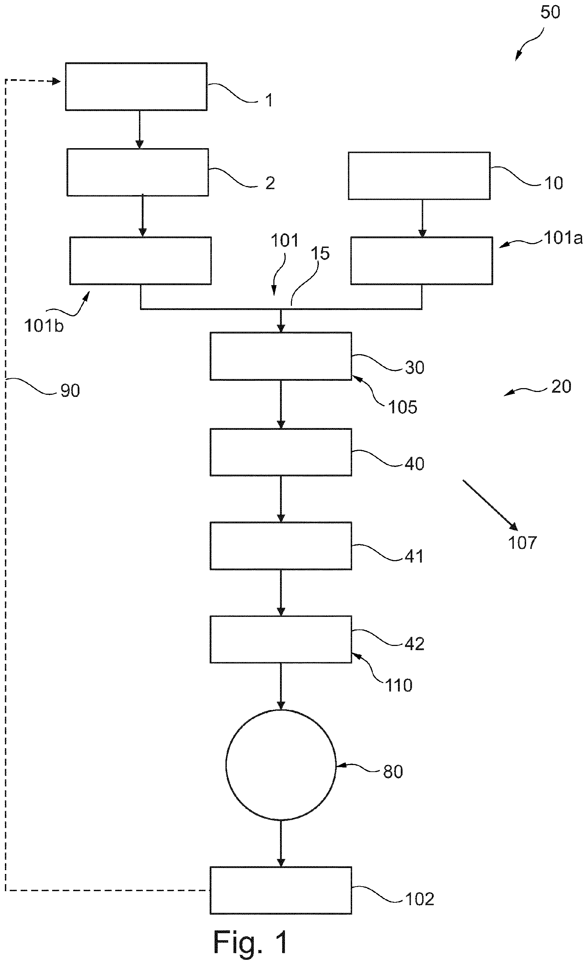

**Figur 1** zeigt ein Flussdiagramm eines Verfahrens zum Bereitstellen (siehe Bezugszeichen 50) eines aufbereiteten Cellulose-aufweisenden Mischausgangsstoffs 110 gemäß einem exemplarischen Ausführungsbeispiel der Erfindung. Zunächst werden zwei Ausgangsstoffe 101a, 101b unabhängig voneinander bereitgestellt.

Das erste Bereitstellen (siehe Bezugszeichen 10) umfasst das Bereitstellen eines ersten Ausgangsstoffs 101a, welcher einen lignocellulosischen Rohstoff, insbesondere einen Holzstoff aufweist. Dieser Holzstoff wird vorbereitet, indem auf bekannte Weise die Rinde entfernt wird. Weiterhin wird der Holzstoff zu Holzschnitzeln zerkleinert. Die Holzschnitzel des ersten vorbereiteten Ausgangsstoffs 101a weisen nach dem Zerkleinern eine durchschnittliche Länge in dem Bereich 2 bis 8 cm und eine durchschnittliche Dicke in dem Bereich 0,2 bis 2,0 cm auf.

Das zweite Bereitstellen (siehe Bezugszeichen 1) umfasst das Bereitstellen eines zweiten Ausgangsstoffs 101b, bei welchem es sich um ein Cellulose-haltiges (im Wesentlichen) Lignin-freies Produkt handelt, insbesondere einen Mix aus Alttextilien (Altkleider und/oder Reste einer Kleidungsherstellung) handelt. Dieser kann aus verschiedenen Quellen (Pre-/Post-Consumer) angeliefert werden und sehr inhomogen sein. Die Alttextilien weisen nicht nur Cellulose auf sondern auch teilweise hohe Gehalte von synthetischen Fasern (z.B. Polyester). In einem ersten Schritt des Bereitstellens kann zunächst ein mechanisches Zerkleinern der Alttextilien durch Schreddern erfolgen. Dadurch können vor allem große nicht-cellulosische Störstoffe aus dem zweiten Ausgangsstoff entfernt werden, beispielsweise Knöpfe, Nähte und Drucke der Altkleider, die zum Erzeugen des Ausgangsstoffs zumindest teilweise verwendet worden sind. Durch das mechanische Zerkleinern kann zum Beispiel der zweite Ausgangsstoff in Einzelfasern zertrennt werden.

In einem weiteren Schritt wird die Zusammensetzung der Alttextilien bestimmt (siehe Block 2). Dieser Schritt kann optional auch vor dem Zerkleinern stattfinden. Das Bestimmen der Zusammensetzung kann (kontinuierlich) an einem (Recycling) Strom von Alttextilien stattfinden. Hierzu können verschiedene automatische Messtechniken (z.B. optische und/oder spektroskopische Methoden) zum Einsatz kommen. Alternativ kann auch ein geschulter Bearbeiter die Zusammensetzungen bestimmen. Ferner kann die Zusammensetzung auch zumindest teilweise vorbekannt sein (z.B. bei Kleidungsresten aus der Produktion). Die bestimmte Zusammensetzung (Ist-Wert) kann daraufhin mit einem Soll-Wert, der vordefinierten Zusammensetzung, verglichen werden. Entsprechend der Abweichung von dem Soll-Wert kann ein selektives Anreichern und/der ein selektives Abreichern durchgeführt werden. Der Ausgangsstoff ist eine Alttextil Mischung mit Cellulosefasern und synthetischen Fasern. Um eine vordefinierte Zusammensetzung zu erreichen, werden Chargen mit bekannten Zusammensetzungen (bekannten Mengen von Zusammensetzungskomponenten) gemischt, so dass die Mischung am Ende die vordefinierte Zusammensetzung aufweist. Besonders gut geeignet sind die oben beschriebenen (Verschnitt) Reste aus der Kleidungsproduktion, welche eine im Wesentlichen bekannte Zusammensetzung aufweisen. Weiterhin können Alttextilien mit bekannter Zusammensetzung, z.B. sehr hohem Baumwollgehalt, zugegeben werden, um den Cellulosegehalt zu erhöhen. Ferner können auch Zusammensetzungskomponenten mit zumindest teilweise bekannter Zusammensetzung dem Ausgangsstoff entzogen werden. Beispielswiese kann gezielt Sportbekleidung entfernt werden, welche einen besonders hohen Anteil an Polyester aufweist. Weiterhin kann ein mechanisches Trennen, z.B. eine Dichtetrennung, insbesondere mittels eines Flotationsverfahrens, durchgeführt werden, um z.B. Polyester selektiv von Cellulose abzureichern. Ferner kann das Bereitstellen ein mechanisches Abtrennen der nicht-cellulosischen Fremdstoffe und/oder ein chemisches Abtrennen der nicht-cellulosischen Fremdstoffe aufweisen. Nach diesen Verfahrensschritten kann der vorbereitete zweite Ausgangsstoff 101b bereitgestellt werden.

In dem hier beschriebenen Ausführungsbeispiel werden der erste Ausgangsstoff 101a und der zweite Ausgangsstoff 101b vor einem gemeinsamen Koch-Prozess 30 in einer Reaktionsvorrichtung 105, also einem Kocher, zu einem Mischausgangsstoff 101 gemischt (siehe Bezugszeichen 15). Alternativ kann die Mischung aber auch erst während des Koch-Prozesses oder danach stattfinden. Das Mischen 15 des ersten Ausgangsstoffs 101a und des zweiten Ausgangsstoffs 101b kann derart stattfinden, dass der Anteil des ersten Ausgangsstoffs 101a in dem Bereich 10 bis 99 % bezogen auf das Gesamtgewicht der festen Massen liegt.

Vor dem Koch-Prozess 30 kann eine Vorhydrolyse stattfinden. In dem Koch-Prozess 30 und in den Nachfolgeprozessen (Bezugszeichen 40, 41, 42) werden der erste Ausgangsstoff 101a und der zweite Ausgangsstoff 101b (welche zu einem Mischausgangsstoff 101 gemischt wurden) gemeinsam aufbereitet (Bezugszeichen 20), um einen aufbereiteten Cellulose-aufweisenden Mischausgangsstoff 110 zu erhalten.

Die Reaktorvorrichtung 105 weist einen diskontinuierlichen oder einen kontinuierlichen Kocher (Digester) auf, wobei der Koch-Prozess 30 als Sulfat-Prozess oder als Sulfit-Prozess durchgeführt wird. In einer speziellen Ausführungsform ist auch ein gamma-Valerolacton Prozess möglich. Während des Koch-Prozesses 30 wird Sauerstoff zugeführt und der Druck während des Koch-Prozesses 30 wird über den Atmosphärendruck erhöht. Die Prozessparameter (u.a. Temperatur, Druck, Verweildauer, Kochlösung, Mischen, Zusammensetzung) des Koch-Prozesses 30 werden derart gesteuert, dass gewünschte Eigenschaften im Endprodukt erhalten werden.

In einem Ausführungsbeispiel werden die Prozessparameter des Koch-Prozesses 30 derart gesteuert, dass die durchschnittliche Kettenlänge der Cellulose in dem aufbereiteten Mischausgangsstoff 110 in einem bestimmten vordefinierten Bereich ist. Es wird ein selektives Abreichern von Cellulose (Fasern) durchgeführt, deren mittlere Kettenlänge unter einem vordefinierten Wert, z.B. 300 Glukoseeinheiten, bevorzugt in dem Bereich 20 bis 150 Glukoseeinheiten, ist. Dies kann beispielsweise über das mechanische Abtrennen, insbesondere die Dichtetrennung, erreicht werden.

Während des Koch-Prozesses 30 entsteht eine Ablauge 107, welche Lignin, z.B. als Na-Lignin oder Lignin-Sulfonat, und Baumharze (aus dem Holzstoff), Reaktionsprodukte aus dem Sulfat/Sulfit-Prozess (z.B. Natriumsulfat, Natriumsulfid, Magnesiumoxid, Schwefeldioxid) und sowohl Baumwoll-Fasern als auch synthetische (Kunststoff) Fasern aufweist. Diese spezielle Ablauge 107 stellt ein besonders gut brennbares Energiemedium dar, mit welchem Energie, z.B. für den Koch-Prozess 30, erzeugt werden kann.

Nachfolgend dem Koch-Prozess 30 wird ein Bleich-Prozess 40 durchgeführt. Weitere Aufbereitungsschritte 20 umfassen das Durchführen eines Reinigungsprozesses 41 und das Durchführen eines Trocknungsprozesses 42 des Mischausgangsstoffs 110, welcher dann als Mischzellstoff-Pulpe vorliegt.

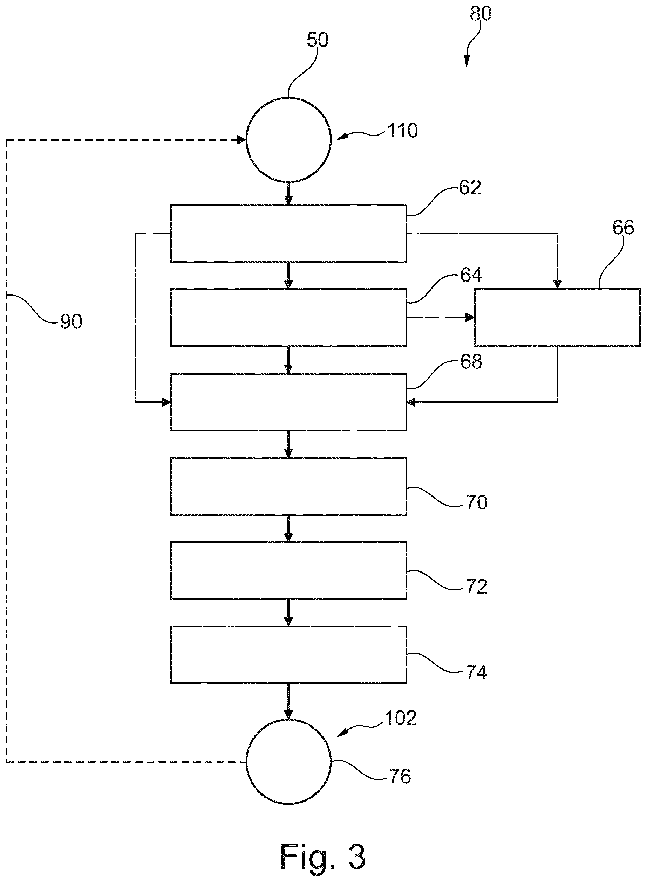

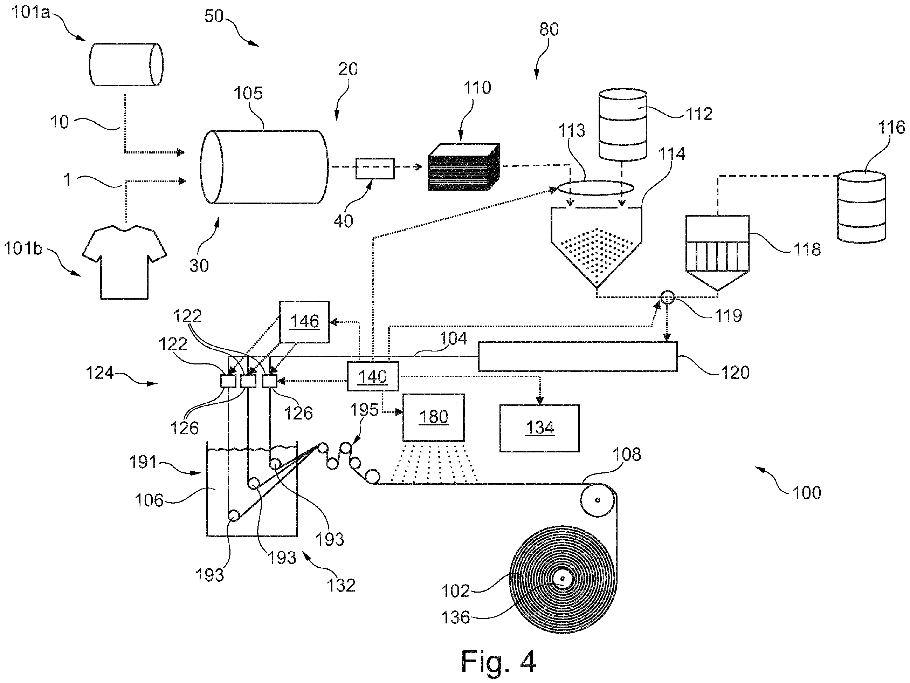

Der entsprechend aufbereitete Mischausgangsstoff 110 wird danach, wie in Block 80 dargestellt, einem Verfahren zum Herstellen eines cellulosischen Formkörpers 102 zugeführt. Ein Beispiel für ein solches Verfahren ist ein Lyocellverfahren, welches bezüglich der Figuren 3 und 4 (siehe unten) detailliert beschrieben wird. Der erhaltene Formkörper 102 (z.B. als Faser in einem Lyocelltextil oder auch eine Papierfaser) kann nach Verwendung erneut recycelt werden (mit Bezugszeichen 90 dargestellt) und in erneut dem zweiten Ausgangsstoff 101b zugeführt werden.

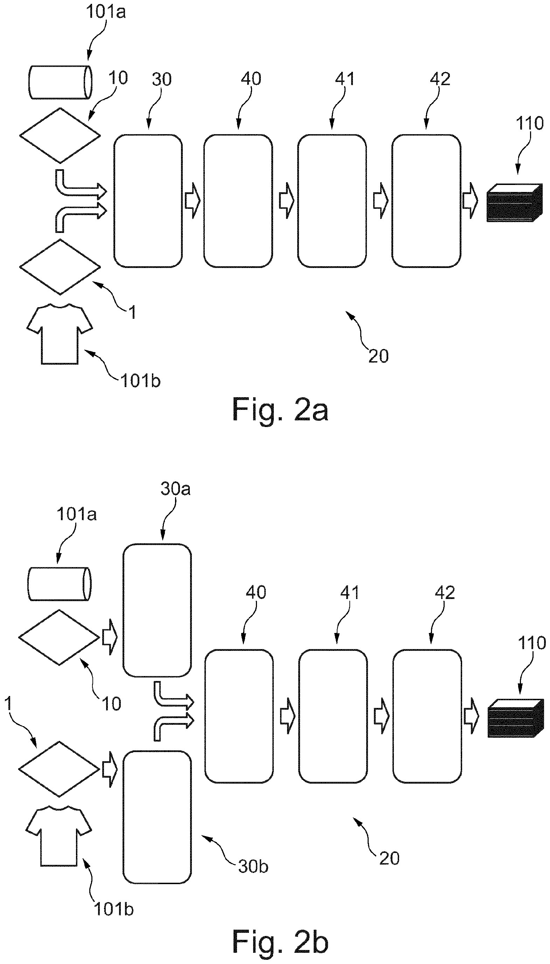

**Figuren 2a und 2b** zeigen jeweils ein weiteres Flussdiagramm eines Verfahrens zum Bereitstellen eines aufbereiteten Cellulose-aufweisenden Mischausgangsstoffs gemäß einem exemplarischen Ausführungsbeispiel der Erfindung.

Figur 2a: Wie für Figur 1 oben beschrieben, werden der erste Ausgangsstoff 101a und der zweite Ausgangsstoff 101b zunächst getrennt vorbereitet (Bezugszeichen 1 und 10) und dann vor oder während eines Koch-Proesses 30 zu einem Mischausgangsstoff 101 vermischt. Die gemeinsame Kochung von zerkleinerten Holz-und Alttextilanteilen wird in jenem Verhältnis zueinander eingesetzt, welches der anwendungsorientierten Nutzung des erhaltenen aufbereiteten Mischausgangsstoffs (z.B. Zellstoffgemisch), in Bezug auf Faserlängen und makromolekularem Aufbau entsprechen.

Figur 2b: In diesem Ausführungsbeispiel wird der Koch-Prozess 30 für jeden Ausgangsstoff 101a, 101b getrennt durchgeführt (parallele Kochung), so dass ein erster Koch-Prozess 30a des ersten Ausgangsstoffs 101a (Sulfat oder Sulfit Prozess) und ein zweiter Koch-Prozess 30b des zweiten Ausgangsstoffs 101b (Sulfat/Sulfit Prozess oder alkalische Kochung (NaOH)) stattfinden. Danach findet eine Mischung noch während des Aufbereitens 20 statt und es wird ein gemeinsamer Bleich-Prozess 40 durchgeführt.

Ferner kann eine zeitliche Synchronisation der unterschiedlichen Kochstrecken (z.B. für ein kontinuierliches Verfahren) durchgeführt werden. Hierbei kann auch eine partiell gleichzeitige Kochung (trotz separater Vorkochung) stattfinden.

**Figur 3** zeigt ein Flussdiagramm 80 eines Verfahrens zum Herstellen eines regenerierten cellulosischen Formkörpers 102 (vergleiche Figur 4) aus dem aufbereiteten Mischausgangsstoff 110 gemäß einem exemplarischen Ausführungsbeispiel der Erfindung.

Der Mischausgangsstoff 110 wird mittels eines Aufbereitungsprozesses bereitgestellt (siehe Block 50, vergleiche Figuren 1 und 2). Wie mit Block 50 dargestellt, kann ein so hergestellter aufbereiteter Mischausgangsstoff 110 für ein nachfolgendes Lyocell- oder Viskoseverfahren verwendet werden, wobei ersteres im Folgenden näher beschrieben wird.

Im Weiteren wird beschrieben, wie auf Basis des Cellulose-aufweisenden Mischausgangsstoffs 110 regenerierte Formkörper 102 aus Cellulose gemäß einem Ausführungsbeispiel der Erfindung hergestellt werden können. Hierfür wird der Mischausgangsstoff 110 einer Apparatur (100, siehe Figur 4) zum Durchführen eines Lyocell-Verfahrens zugeführt. Zunächst erfolgt ein optionales Vorbereiten (Schritt 62) des aufbereiteten Mischausgangsstoffs 110, z.B. ein Reinigen oder ein Zerkleinern.

Es ist auch möglich (siehe Block 64), den Cellulose aufweisenden Mischausgangsstoff 110 mit anderen Cellulose aufweisenden Materialien gemeinsam für das nachfolgende Lyocell-Verfahren einzusetzen. Somit kann der Mischausgangsstoff 110 mit einem weiteren Ausgangsstoff vermischt werden, welcher Cellulose und zumindest einen synthetischen Kunststoff aufweist, siehe Block 64. Dieser zugeführte weitere Ausgangsstoff weist einen Anteil an synthetischen Kunststoffen auf, welcher von dem Anteil an synthetischem Kunststoff in dem Mischausgangsstoff 110 verschieden ist. Das Erzeugen des regenerierten cellulosischen Formkörpers kann nun basierend auf dem Mischausgangsstoff 110 und dem weiteren Ausgangsstoff ausgeführt werden, so dass der regenerierte cellulosische Formkörper 102 einen vorbestimmten Anteil an synthetischem Kunststoff enthält. Der weitere Ausgangsstoff kann alternativ oder ergänzend zum Beispiel auch Reste aus einer Kleidungsherstellung aufweisen. Ferner kann der weitere Ausgangsstoff auch Altpapier aufweisen.

Unmittelbar nach dem Vorbereiten 62 bzw. unmittelbar nach dem Mischen 64 kann ein direktes Lösen 68 des (reinen bzw. gemischten) Mischausgangsstoffs 110 in einem weiteren Lösungsmittel 116 (zum Beispiel tertiäre Aminoxide wie zum Beispiel N-Methylmorpholin-N-oxid (NMMO)) vorteilhaft ohne chemische Vorbehandlung erfolgen. Genauer gesagt kann der mechanisch zerkleinerte (und optional gemischte) Mischausgangsstoff 110 insbesondere ohne chemische Reinigung und ohne Einstellung der Viskosität direkt in Lösung übergeführt werden. Auf diese Weise kann das Herstellungs- bzw. Recyclingverfahren außergewöhnlich einfach und schnell sowie umweltfreundlich durchgeführt werden.

Alternativ kann das Verfahren nach dem Vorbereiten 62 (oder nach dem Mischen 64) und vor dem Lösen 68 ein optionales chemisches Reinigen 66 des Mischausgangsstoffs 110 aufweisen. Ein solches optionales Reinigen 66 kann zum Beispiel ein zumindest teilweises Entfernen von Farbstoffen durch Bleichen aufweisen. Dadurch ist es möglich, den Mischausgangsstoff 110 vor einem nachfolgenden Lösen 68 des Mischausgangsstoffs 110 in Lösungsmittel 116 ganz oder teilweise zu entfärben, beispielsweise um weiße oder graue Formkörper 102 herzustellen. Es ist alternativ oder ergänzend auch möglich, dass im Rahmen des optionalen chemischen Reinigens 66 der Mischausgangsstoff 110 (vor oder nach seinem Lösen 68) zumindest teilweise von Fasern des Mischausgangsstoffs 110 vernetzenden Vernetzern befreit wird. Mittels des Reinigens 66 kann optional zumindest ein Teil von synthetischem Kunststoff entfernt werden, falls dies gewünscht ist. Beispielsweise kann auf diese Weise der Anteil von synthetischem Kunststoff in dem herzustellenden Formkörper 102 eingestellt bzw. beeinflusst werden.

Nach dem Lösen 68 des Mischausgangsstoffs 110 in Lösungsmittel (bevorzugt NMMO) kann die erhaltene Lyocell-Spinnlösung 104 durch eine oder mehrere Spinndüsen gepresst werden, wodurch Fäden bzw. Filamente honigzäher Viskosität entstehen (siehe Block 70, der dieses Spinnen betrifft).

Während und/oder nach dem Fallen dieser Fäden bzw. Filamente werden diese in Wirkverbindung mit einem wässrigen Milieu gebracht und dadurch verdünnt. Die Konzentration des Lösungsmittels 116 der Fäden bzw. Filamente wird dadurch in einem wässrigen Nebel bzw. einem wässrigen Flüssigkeitsbad so weit reduziert, dass die Lyocell-Spinnlösung in eine feste Phase aus Cellulose-Filamenten überführt wird. Anders ausgedrückt kommt es zu einem Präzipitieren, Fällen oder Koagulieren der Cellulose-Filamente, siehe Bezugszeichen 72. Dadurch wird eine Vorform des Formkörpers 102 erhalten.

Ferner kann das Verfahren ein Nachbearbeiten 74 der ausgefällten Lyocell-Cellulose zum Erhalten des Formkörpers 102 aus der Vorform des Formkörpers 110 aufweisen. Eine solche Nachbearbeitung kann zum Beispiel ein Trocknen, Imprägnieren und/oder Umformen der erhaltenen Filamente zu dem finalen Formkörper 102 umfassen. Zum Beispiel kann der Formkörper 102 durch das beschriebene Herstellungsverfahren zu Fasern, einer Folie, einem Gewebe, einem Vlies, einer Kugel, einem porösen Schwamm, oder Beads verarbeitet werden und dann einer weiteren Nutzung zugeführt werden (vergleiche Bezugszeichen 76).

Mit Vorteil können nach Nutzung des Formkörpers 102 dessen Cellulose und optionale synthetische Kunststoffe von neuem wiedergewonnen werden, indem ein weiteres Verfahren entsprechend der Verfahrensschritte zwischen Bezugszeichen 50 und 74 durchgeführt wird (siehe Block 90). Alternativ können die Cellulose und optionaler weiterer synthetischer Kunststoff des Formkörpers 102 in einem anderen Verfahren, beispielsweise einem Viskoseverfahren, wiedergewonnen werden.

**Figur 4** zeigt eine Apparatur 100 zum Bereitstellen eines aufbereiteten, Cellulose-aufweisenden, Mischausgangsstoffs 110 und zum Herstellen eines regenerierten cellulosischen Formkörpers 102 mittels eines Lyocell-Verfahrens auf Basis des Mischausgangsstoffs 110 gemäß einem exemplarischen Ausführungsbeispiel der Erfindung, das bezugnehmend auf die Figuren 1 und 2 beschrieben wurde. So werden ein erster Ausgangsstoff 101a, welcher Holzstoff aufweist, und ein zweiter Ausgangsstoff 101b, welcher Alttextilien aufweist, getrennt bereitgestellt (Bezugszeichen 1 und 10) und dann vermischt, um gemeinsam aufbereitet (Bezugszeichen 20) zu werden. Hierfür wird die Mischung zunächst einem Koch-Prozess 30 in einer Reaktorvorrichtung 105 zugeführt, wobei die Ausgangsstoffe gemeinsam gekocht werden. Danach findet ein gemeinsamer Bleich-Prozess 40 statt, so dass der aufbereitete Cellulose-aufweisende Mischausgangsstoff 110 bereitgestellt wird.

Figur 4 zeigt also eine Apparatur 100 gemäß einem exemplarischen Ausführungsbeispiel der Erfindung zum Herstellen eines Cellulose aufweisenden Formkörpers 102, der zum Beispiel in Form eines Vlieses (Nonwoven), als Faser, Folie, Kugel, Textilgewebe, Schwamm oder in Form von Beads oder Flakes hergestellt werden kann. Gemäß Figur 4 wird der Formkörper 102 direkt aus einer Spinnlösung 104 hergestellt. Letztere wird mittels eines Koagulations-Fluids 106 (insbesondere aus Luftfeuchtigkeit) und/oder eines Koagulations-Bads 191 (beispielsweise ein Wasserbad, das optional tertiäre Aminoxide wie zum Beispiel N-Methylmorpholin-N-oxid (NMMO) aufweist) in Cellulosefasern 108 als Formkörper 102 umgewandelt. Mittels der Apparatur 100 kann ein Lyocell-Verfahren ausgeführt werden. Auf diese Weise können als Formkörper 102 zum Beispiel im Wesentlichen endlose Filamente oder Fasern 108 oder Mischungen im Wesentlichen endloser Filamente und Fasern 108 diskreter Länge hergestellt werden. Eine Mehrzahl von Düsen, die jeweils eine oder mehrere Öffnungen 126 (die auch als Spinnlöcher bezeichnet werden können) haben, sind bereitgestellt, um Lyocell-Spinnlösung 104 auszustoßen.

Wie Figur 4 entnommen werden kann, kann einem Speichertank 114 über eine Dosiereinrichtung 113 der aufbereitete Cellulose-aufweisende Mischausgangsstoff 110 dem Lyocellverfahren 80 zugeführt werden.

Gemäß einem Ausführungsbeispiel kann ein Wassereintrag in den Cellulose basierten Mischausgangsstoff 110 durch ein unten näher beschriebenes Lösungsmittel 116 (insbesondere NMMO) erfolgen. Auch kann der Cellulose basierte Mischausgangsstoff 110 selbst bereits eine gewisse Restfeuchte enthalten (trockener Zellstoff zum Beispiel hat häufig eine Restfeuchte von 5 Gewichtsprozent bis 8 Gewichtsprozent). Insbesondere kann gemäß dem beschriebenen Ausführungsbeispiel der Mischausgangsstoff 110 ohne Vorbefeuchtung direkt in eine Mischung aus Wasser und Lösungsmittel 116 gegeben werden. Ein in Figur 4 gezeigter optionaler Wasserbehälter 112 kann dann weggelassen werden.

Gemäß einem alternativen Ausführungsbeispiel kann der Cellulose-aufweisende Mischausgangsstoff 110 zusätzlich angefeuchtet werden, um dadurch feuchte Cellulose bereitzustellen. Zu diesem Zweck kann Wasser aus einem optionalen Wasserbehälter 112 dem Speichertank 114 über die Dosiereinrichtung 113 zugeführt werden. Daher kann die Dosiereinrichtung 113, gesteuert mittels einer Steuereinrichtung 140, dem Speichertank 114 einstellbare relative Mengen von Wasser und Mischausgangsstoff 110 zuführen.

Ein geeignetes Lösungsmittel 116, bevorzugt tertiäre Aminoxide wie zum Beispiel N-Methylmorpholin-N-oxid (NMMO), beziehungsweise eine wässrige Mischung des Lösungsmittels 116, zum Beispiel eine 76%ige Lösung von NMMO in Wasser, ist in einem Lösungsmittelbehälter enthalten. Die Konzentration des Lösungsmittels 116 kann in einer Konzentriereinrichtung 118 entweder durch Zugabe von reinem Lösemittel oder Wasser eingestellt werden. Das Lösungsmittel 116 kann dann mit dem Mischausgangsstoff 110 mit definierbaren relativen Mengen in einer Mischeinheit 119 gemischt werden. Auch die Mischeinheit 119 kann mittels der Steuereinheit 140 gesteuert werden. Dadurch wird der Cellulose aufweisende Mischausgangsstoff 110 in dem konzentrierten Lösungsmittel 116 in einer Löseeinrichtung 120 mit einstellbaren relativen Mengen gelöst, wodurch die Lyocell-Spinnlösung 104 erhalten wird. Die relativen Konzentrationsbereiche (auch als Spinnfenster bezeichnet) der Komponenten Ausgangsstoff 110, Wasser und Lösungsmittel 116 in der Spinnlösung 104 zur Herstellung von cellulosischen Regeneratformkörpern nach dem Lyocell-Verfahren können, wie einem Fachmann bekannt, geeignet eingestellt werden.

Die Lyocell-Spinnlösung 104 wird einer Fasererzeugungseinrichtung 124 zugeführt (die mit einer Anzahl von Spinnbalken oder Jets 122 ausgebildet sein kann).

Wenn die Lyocell-Spinnlösung 104 durch die Öffnungen 126 der Jets 122 geführt wird, wird sie in eine Mehrzahl von parallelen Fäden aus Lyocell-Spinnlösung 104 aufgeteilt. Die beschriebene Prozessführung transformiert die Lyocell-Spinnlösung 104 in zunehmend lange und dünne Fäden, deren Eigenschaften durch entsprechende Einstellung der Prozessbedingungen, gesteuert durch die Steuereinheit 140, eingestellt werden können. Optional kann ein Gasfluss die Lyocell-Spinnlösung 104 auf ihrem Weg von den Öffnungen 126 zu einer Faseraufnahmeeinheit 132 beschleunigen.

Nachdem die Lyocell-Spinnlösung 104 sich durch die Jets 122 und weiter abwärts bewegt hat, interagieren die langen und dünnen Fäden der Lyocell-Spinlösung 104 mit dem Koagulations-Fluid 106.

Bei der Wechselwirkung mit dem Koagulations-Fluid 106 (zum Beispiel Wasser) wird die Lösungsmittelkonzentration der Lyocell-Spinnlösung 104 reduziert, so dass die Cellulose des Mischausgangsstoffs 110 zumindest teilweise als lange und dünne Cellulosefasern 108 (die immer noch Reste von Lösungsmittel und Wasser enthalten können) koaguliert bzw. ausfällt.

Während oder nach der initialen Bildung der individuellen Cellulosefasern 108 aus der extrudierten Lyocell-Spinnlösung 104 werden die Cellulosefasern 108 an der Faseraufnahmeeinheit 132 aufgenommen. Die Cellulosefasern 108 können in das in Figur 4 dargestellte Koagulations-Bad 191 (zum Beispiel ein Wasserbad, optional aufweisend ein Lösungsmittel wie NMMO) eintauchen und können bei Wechselwirkung mit der Flüssigkeit des Koagulations-Bads 191 ihr Ausfällen abschließen. Abhängig von der Prozesseinstellung der Koagulation kann die Cellulose Cellulosefasern 108 bilden (wie gezeigt, wobei die Cellulosefasern 108 einstoffig bzw. integral miteinander verschmolzen ("merging") sein können oder als getrennte Cellulosefasern 108 vorliegen können) oder kann sich an der Faseraufnahmeeinheit 132 eine Folie bzw. ein Film aus Cellulose bilden (nicht in Figur 4 dargestellt).

Die Cellulosefasern 108 werden also aus den Spinndüsen der Jets 122 extrudiert und durch das Spinnbad bzw. Koagulations-Bad 191 (enthaltend zum Beispiel Wasser und NMMO in niedriger Konzentration zur Ausfällung/Koagulation) geführt, dabei werden die Cellulosefasern 108 um eine jeweilige Umlenkrolle 193 im Koagulations-Bad 191 geführt und außerhalb des Koagulations-Bads 191 einer Abzugsgalette 195 zugeführt. Die Abzugsgalette 195 sorgt für Weitertransport und Nachverstreckung der Cellulosefasern 108, um einen gewünschten Titer zu erreichen. Nach der Abzugsgalette 195 wird das Faserbündel aus den Cellulosefasern 108 in einer Wascheinheit 180 gewaschen, gegebenenfalls aviviert und schließlich geschnitten (nicht gezeigt).

Obwohl dies in Figur 4 nicht dargestellt ist, kann Lösungsmittel 116 der Lyocell-Spinnlösung 104, das aus den Cellulosefasern 108 beim Koagulieren und bei einem nachfolgenden Waschen in der Wascheinheit 180 entfernt worden ist, zumindest teilweise zurückgewonnen bzw. recycelt werden und in einem nachfolgenden Zyklus wieder in den Speichertank 114 übergeführt werden.

Während des Transports entlang der Faseraufnahmeeinheit 132 kann der Formkörper 102 (hier in Form der Cellulosefasern 108) mittels der Wascheinheit 180 gewaschen werden, indem Letztere eine Waschflüssigkeit zum Entfernen von Lösungsmittelresten zuführt. Danach kann der Formkörper 102 getrocknet werden.

Der Formkörper 102 kann darüber hinaus einer Nachbehandlung unterzogen werden, siehe die schematisch dargestellte Nachbehandlungseinheit 134. Zum Beispiel kann eine solche Nachbehandlung eine Hydroverschlingung, eine Nadelbehandlung, eine Imprägnierung, eine Dampfbehandlung mit einem unter Druck zugeführten Dampf und/oder ein Kalandrieren, etc., aufweisen.

Die Faseraufnahmeeinheit 132 kann den Formkörper 102 einer Aufwickeleinrichtung 136 zuführen, an welcher der Formkörper 102 aufgewickelt werden kann. Der Formkörper 102 kann dann als Rollgut einer Entität zugeführt werden, die Produkte wie zum Beispiel Wischtücher oder Textilien auf Basis des Formkörpers 102 herstellt.

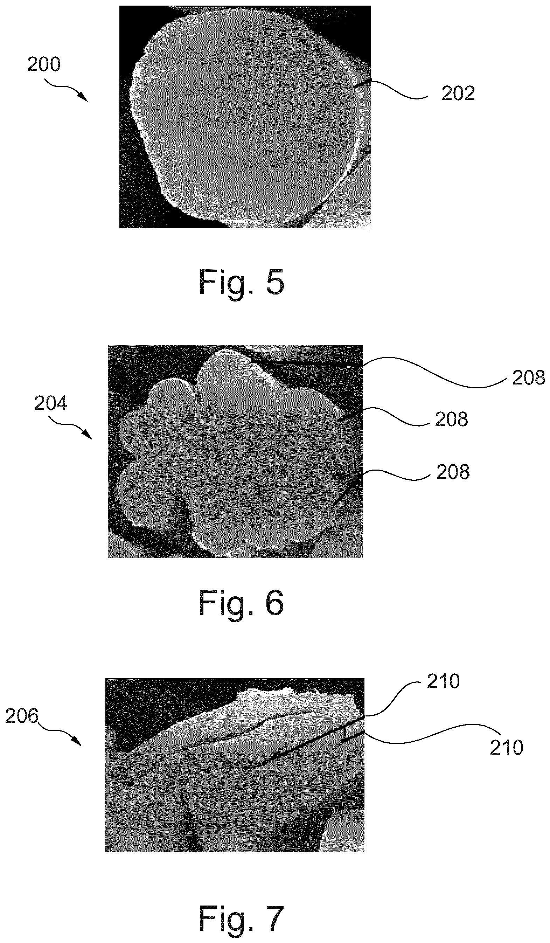

**Figur 5** zeigt eine mittels eines Lyocell-Verfahrens hergestellte Cellulosefaser 200 im Querschnitt. Die mittels eines Lyocell-Verfahrens hergestellte Cellulosefaser 200 hat eine glatte runde Außenfläche 202 und ist homogen und frei von makroskopischen Löchern mit Cellulosematerial ausgefüllt. Sie kann daher von einem Fachmann eindeutig von mittels eines Viskoseverfahrens hergestellten Cellulosefasern (siehe Bezugszeichen 204 in Figur 6) und von Cellulosefasern aus Baumwollpflanzen (siehe Bezugszeichen 206 in Figur 7) unterschieden werden.

**Figur 6** zeigt eine mittels eines Viskoseverfahrens hergestellte Cellulosefaser 204 im Querschnitt. Die Cellulosefaser 204 ist wolkenförmig und weist entlang ihres äußeren Umfangs eine Mehrzahl von bogenförmigen Strukturen 208 auf.

**Figur 7** zeigt eine natürliche Cellulosefaser 206 aus einer Baumwollpflanze im Querschnitt. Die Cellulosefaser 206 ist nierenförmig und weist im Inneren ein materialfreies Lumen 210 als vollumfänglich umschlossenen Hohlraum auf.

Anhand der signifikanten geometrischen bzw. strukturellen Unterschiede der Fasern gemäß Figur 5 bis Figur 7 ist es einem Fachmann möglich, zum Beispiel unter einem Mikroskop unzweideutig zu ermitteln, ob eine Cellulosefaser mittels des Lyocell-Verfahrens, mittels des Viskoseverfahrens oder natürlich in einer Baumwollpflanze gebildet worden ist.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Ein Verfahren zum Bereitstellen eines aufbereiteten Cellulose-aufweisenden Mischausgangsstoffs (110) zum Bilden eines regenerierten, cellulosischen Formkörpers (102), wobei das Verfahren aufweist:
Bereitstellen (10) eines ersten Ausgangsstoffs (101a), welcher einen lignocellulosischen Rohstoff, aufweist;
Bereitstellen (1) eines zweiten Ausgangsstoffs (101b), welcher ein Cellulose-haltiges Lignin-freies Produkt aufweist;
Mischen (15) des ersten Ausgangsstoffs (101a) und des zweiten Ausgangsstoffs (101b) zu einem Mischausgangsstoff (101); und
zumindest teilweise gemeinsames Aufbereiten (20) des ersten Ausgangsstoffs (101a) und des zweiten Ausgangsstoffs (101b) zum Erhalten des aufbereiteten Cellulose-aufweisenden Mischausgangsstoffs (110), insbesondere eines Mischzellstoffs,wobei der lignocellulosische Rohstoff eines aus der Gruppe, welche besteht aus: einem Holzstoff, insbesondere Holzschnitzel, Einjahrespflanzen und
wobei das Cellulose-haltige Lignin-freie Produkt Textilien aufweist.

2. Das Verfahren gemäß Anspruch 1, wobei das Bereitstellen (10) des ersten Ausgangsstoffs (101a) zumindest eines der folgenden Merkmale aufweist:
Vorbereiten des lignocellulosischen Rohstoffs, insbesondere Zerkleinern, weiter insbesondere Entfernen von Rinde;
wobei die Holzschnitzel des ersten Ausgangsstoffs (101a) eine durchschnittliche Länge in dem Bereich 2 bis 8 cm und/oder eine durchschnittliche Dicke in dem Bereich 0,2 bis 2,0 cm aufweisen.

3. Das Verfahren gemäß Anspruch 1, wobei das Bereitstellen (1) des zweiten Ausgangsstoffs (101b) zumindest eines der folgenden Merkmale aufweist:
Vorbereiten des Cellulose-haltigen Lignin-freien Produkts, insbesondere Zerkleinern, weiter insbesondere zumindest teilweises Entfernen von nicht-Faser Fremdstoffen;
Einstellen (2) einer im Wesentlichen vordefinierten Zusammensetzung, wobei das Einstellen (2) aufweist:
selektives Anreichern zumindest einer Zusammensetzungskomponente und/oder
selektives Abreichern zumindest einer Zusammensetzungskomponente.

4. Das Verfahren gemäß Anspruch 1 oder 3,
wobei die Textilien, insbesondere Alttextilien, nicht-cellulosische Fremdstoffe, insbesondere synthetische Fasern, aufweisen, und wobei das Bereitstellen (1) ferner aufweist:
mechanisches Abtrennen zumindest eines Teils der nicht-cellulosischen Fremdstoffe; und/oder
chemisches Abtrennen zumindest eines Teils der nicht-cellulosischen Fremdstoffe.

5. Das Verfahren gemäß einem beliebigen der vorhergehenden Ansprüche, wobei das Aufbereiten (20) zumindest eines der folgenden Merkmale aufweist:
Durchführen eines Koch-Prozesses (30), insbesondere mittels zumindest einem aus der Gruppe, welche besteht aus: einem Sulfat-Prozess, einem Sulfit-Prozess, einem Organosolv Prozess, insbesondere einem gamma-Valerolacton Prozess, einem Prozess mit einer ionischen Flüssigkeit;
Durchführen eines Bleich-Prozesses (40), insbesondere nach dem Koch-Prozess (30);
Durchführen eines Reinigungsprozesses (41);
Durchführen eines Trocknungsprozesses (42) des aufbereiteten Mischausgangsstoffs (110), insbesondere einer Mischzellstoff-Pulpe;
Zuführen eines Oxidationsmittels, insbesondere Sauerstoff, in den Koch-Prozess (30);
Erhöhen des Drucks während des Koch-Prozesses (30) über den Atmosphärendruck;
Mischen (15) des ersten Ausgangsstoffs (101a) und des zweiten Ausgangsstoffs (101b) derart, dass der Anteil des ersten Ausgangsstoffs (101a) in dem Bereich 1 bis 99%, insbesondere 5 bis 90%, weiter insbesondere 10 bis 80%, bezogen auf das Gesamtgewicht der festen Massen liegt;
Mischen (15) des ersten Ausgangsstoffs (101a) in Form einer flüssigen Cellulosesuspension mit dem zweiten Ausgangsstoff (101b) in Form einer flüssigen Cellulosesuspension;
Durchführen des Koch-Prozesses (30) derart, dass der durchschnittliche Polymerisationsgrad der Cellulose innerhalb eines vordefinierten Bereichs ist;
Durchführen eines Enzym-Prozesses;
Durchführen eines kontinuierlichen Prozesses, insbesondere aufweisend:
kontinuierliches Bereitstellen des ersten Ausgangsstoffs (101a) und/oder
kontinuierliches Bereitstellen des zweiten Ausgangsstoffs (101b);
kontinuierliches Mischen (15) des ersten Ausgangsstoffs (101a) und des zweiten Ausgangsstoffs (101b); und
zumindest teilweise gemeinsames kontinuierliches Aufbereiten (20) des Mischausgangsstoffs (101).

6. Das Verfahren gemäß einem beliebigen der vorhergehenden Ansprüche, wobei das Mischen (15) ferner aufweist:
Mischen (15) des ersten Ausgangsstoffs (101a) und des zweiten Ausgangsstoffs (101b) zu einem der folgenden Zeitpunkte:
vor einer Vorhydrolyse;
vor dem Koch-Prozess (30);
während des Koch-Prozesses (30);
nach dem Koch-Prozess (30);
vor dem Bleich-Prozess (40);
während einer Bleich-Sequenz (40);
nach dem Bleich-Prozess (40);
vor einer Trocknung (42).

7. Das Verfahren gemäß Anspruch 5 oder 6, wobei das Mischen (15) ferner aufweist:
Zuführen (10) des ersten Ausgangsstoffs (101a) zu dem Koch-Prozess (30) und danach Zuführen (1) des zweiten Ausgangsstoffs (101b) zu dem Koch-Prozess (30), insbesondere wenn der zweite Ausgangsstoff (101b) einen geringen Anteil an nicht-cellulosischen Fremdstoffen aufweist;
oder
Zuführen (1) des zweiten Ausgangsstoffs (101b) zu dem Koch-Prozess (30) und danach Zuführen (10) des ersten Ausgangsstoffs (101a) zu dem Koch-Prozess (30), insbesondere wenn der zweite Ausgangsstoff (101b) einen hohen Anteil an nicht-cellulosischen Fremdstoffen aufweist.

8. Ein Verfahren zum Herstellen eines, insbesondere regenerierten, cellulosischen Formkörpers (102), das Verfahren aufweisend:
Bereitstellen (50) eines aufbereiteten Cellulose-aufweisenden Mischausgangsstoffs (110) gemäß einem beliebigen der vorhergehenden Ansprüche; und
Bilden (80) des cellulosischen Formkörpers (102) aus dem aufbereiteten Cellulose-aufweisenden Mischausgangsstoff (110).

9. Das Verfahren gemäß Anspruch 8, aufweisend zumindest eines der folgenden Merkmale:
wobei das Bilden (80) des, insbesondere regenerierten, cellulosischen Formkörpers (102) aus dem aufbereiteten Cellulose-aufweisenden Mischausgangsstoff (110) eines aufweist aus der Gruppe welche besteht aus:
einem Direktlöseverfahren, insbesondere einem Lyocellverfahren, einem Viskoseverfahren, insbesondere einem Carbamatverfahren oder einem Kaltalkaliverfahren, einem Papierherstellungsverfahren;
wobei der, insbesondere regenerierte, cellulosische Formkörper (102) ausgewählt ist aus der Gruppe, welche besteht aus: einem Filament, einer Faser, einer Folie, einem Schwamm, einer Mikrokugel, einem Bead, einem Vliesstoff, oder einem Papierstoff.

10. Ein aufbereiteter Cellulose-aufweisender Mischausgangsstoff (110), hergestellt mit einem Verfahren gemäß einem der Ansprüche 1 bis 9, insbesondere ein Mischzellstoff hergestellt mit einem Verfahren gemäß einem der Ansprüche 1 bis 9, aufweisend zumindest eines der folgenden Merkmale:
intrinsische nicht-cellulosische Fremdstoffe, insbesondere Metalloxide, weiter insbesondere Pigmente;
synthetische Fasern, insbesondere PUR, weiter insbesondere Elastan;
10% oder weniger Cellulose mit einem durchschnittlichen Polymerisationsgrad in dem Bereich 50 bis 200 Monomere;
Cellulose mit einem durchschnittlichen Polymerisationsgrad von 300 Monomeren oder mehr, insbesondere 500 Monomeren oder mehr;
einen Anteil von Naturfasern, insbesondere Baumwoll-Fasern, welcher größer als 1%, insbesondere größer als 10%, ist.

11. Gemeinsames Verwenden von einem Lignin-haltigen Rohstoff, aufweisend einen Holzstoff, insbesondere Holz und/oder Einjahrespflanzen, und einem Lignin-freien Produkt, aufweisend Textilien, in zumindest einem Aufbereitungsschritt (20), insbesondere eines Koch-Prozesses (30), zum Bereitstellen eines Mischzellstoffs (110) für das Herstellen eines cellulosischen Formkörpers (102).

12. Ein Abfallprodukt (107) aus einem Verfahren gemäß einem der Ansprüche 1 bis 9, insbesondere eine Ablauge aus einem Verfahren gemäß einem der Ansprüche 1 bis 9, aufweisend:
Lignin;
zumindest ein Reaktionsprodukt aus einem Koch-Prozess, insbesondere einem Sulfat-Prozess oder einem Sulfit-Prozess;
zumindest einem aus der Gruppe, welche besteht aus: Baumwoll-Fasern, und synthetischen Fasern, insbesondere Kunststoff-Fasern.

13. Verwenden des Abfallprodukts (107) gemäß Anspruch 12 als Energieerzeugungsmedium, Nebenprodukt, oder Chemikalien-Rückgewinnungsmedium.

## Claims

1. A method for providing a processed cellulose-comprising mixed starting material (110) for forming a regenerated cellulosic molded body (102), wherein the method comprises:
providing (10) a first starting material (101a) which comprises a lignocellulosic raw material;
providing (1) a second starting material (101b) which comprises a cellulose-containing lignin-free product;
mixing (15) the first starting material (101a) and the second starting material (101b) to a mixed starting material (101); and
at least partially commonly processing (20) the first starting material (101a) and the second starting material (101b) for obtaining the processed cellulose-comprising mixed starting material (110), in particular a mixed pulp, wherein the lignocellulosic raw material comprises one of the group which is consisting of: a wood material, in particular wood chips, annual plants, and
wherein the cellulose-containing lignin-free product comprises textiles.

2. The method according to claim 1, wherein providing (10) the first starting material (101a) comprises at least one of the following features:
preparing the lignocellulosic raw material, in particular comminuting, further in particular removing bark;
wherein the wood chips of the first starting material (101a) comprise an average length in the range of 2 to 8 cm and/or an average thickness in the range of 0.2 to 2.0 cm.

3. The method according to claim 1, wherein providing (1) the second starting material (101b) comprises at least one of the following features:
preparing the cellulose-containing lignin-free product, in particular comminuting, further in particular at least partially removing non-fiber foreign matters;
adjusting (2) a substantially predefined composition, wherein adjusting (2) comprises:
selectively enriching at least one composition component, and/or
selectively depleting at least one composition component.

4. The method according to claim 1 or 3,
wherein the textiles, in particular old textiles, comprise non-cellulosic foreign matters, in particular synthetic fibers, and wherein providing (1) further comprises:
mechanically separating at least a part of the non-cellulosic foreign matters; and/or
chemically separating at least a part of the non-cellulosic foreign matters.

5. The method according to any of the previous claims,
wherein processing (20) comprises at least one of the following features:
performing a boiling process (30), in particular by at least one of the group which is consisting of: a sulfate process, a sulfite process, an organosolv process, in particular a gamma-valerolactone process, a process with an ionic liquid;
performing a bleaching process (40), in particular after the boiling process (30);
performing a cleaning process (41);
performing a drying process (42) of the processed mixed starting material (110), in particular a mixed pulp;
supplying an oxidizing agent, in particular oxygen, to the boiling process (30);
increasing the pressure during the boiling process (30) above the atmospheric pressure;
mixing (15) the first starting material (101a) and the second starting material (101b), such that the portion of the first starting material (101a) is in the range of 1 to 99 %, in particular 5 to 90 %, further in particular 10 to 80 %, with respect to the total weight of the solid masses;
mixing (15) the first starting material (101a) in form of a liquid cellulose suspension with the second starting material (101b) in form of a liquid cellulose suspension;
performing the boiling process (30), such that the average degree of polymerization of the cellulose is within a predefined range;
performing an enzyme process;
performing a continuous process, in particular comprising:
continuously providing the first starting material (101a), and/or
continuously providing the second starting material (101b);
continuously mixing (15) the first starting material (101a) and the second starting material (101b); and
at least partially commonly continuously processing (20) the mixed starting material (101).

6. The method according to any of the previous claims,
wherein mixing (15) further comprises:
mixing (15) the first starting material (101a) and the second starting material (101b) at one of the following times:
prior to a pre-hydrolysis;
prior to the boiling process (30);
during the boiling process (30);
after the boiling process (30);
prior to the bleaching process (40);
during a bleaching sequence (40);
after the bleaching process (40);
prior to a drying (42).

7. The method according to claim 5 or 6, wherein mixing (15) further comprises:
supplying (10) the first starting material (101a) to the boiling process (30), and subsequently supplying (1) the second starting material (101b) to the boiling process (30), in particular when the second starting material (101b) comprises a low portion of non-cellulosic foreign matters;
or
supplying (1) the second starting material (101b) to the boiling process (30), and subsequently supplying (10) the first starting material (101a) to the boiling process (30), in particular when the second starting material (101b) comprises a high portion of non-cellulosic foreign matters.

8. A method for manufacturing a, in particular regenerated, cellulosic molded body (102), the method comprising:
providing (50) a processed cellulose-comprising mixed starting material (110) according to any of the previous claims; and
forming (80) the cellulosic molded body (102) from the processed cellulose-comprising mixed starting material (110).

9. The method according to claim 8, comprising at least one of the following features:
wherein forming (80) the, in particular regenerated, cellulosic molded body (102) from the processed cellulose-comprising mixed starting material (110) comprises one of the group which is consisting of:
a direct solving method, in particular a lyocell method, a viscose method, in particular a carbamate method or a cold alkali method, a paper manufacturing method;
wherein the, in particular regenerated, cellulosic molded body (102) is selected from the group which is consisting of: a filament, a fiber, a foil, a sponge, a microsphere, a bead, a fleece, or a paper material.

10. A processed cellulose-comprising mixed starting material (110), manufactured by a method according to one of the claims 1 to 9, in particular a mixed pulp, manufactured by a method according to one of the claims 1 to 9, comprising at least one of the following features:
intrinsic non-cellulosic foreign matters, in particular metal oxides, further in particular pigments;
synthetic fibers, in particular PUR, further in particular elastane;
10 % or less cellulose with an average degree of polymerization in the range of 50 to 200 monomers;
cellulose with an average degree of polymerization of 300 monomers or more, in particular 500 monomers or more;
a portion of natural fibers, in particular cotton fibers, which is larger than 1 %, in particular larger than 10 %.

11. Commonly using a lignin-containing raw material comprising a wood material, in particular wood and/or annual plants, and a lignin-free product comprising textiles, in at least one processing stage (20), in particular a boiling process (30), for providing a mixed pulp (110) for manufacturing a cellulosic molded body (102).

12. A waste product (107) from a method according to one of the claims 1 to 9, in particular a waste lye from a method according to one of the claims 1 to 9, comprising:
lignin;
at least one reaction product from a boiling process, in particular a sulfate process or a sulfite process;
at least one of the group which is consisting of: cotton fibers and synthetic fibers, in particular plastic fibers.

13. Using the waste product (107) according to claim 12 as energy generation medium, by-product, or chemicals-recovery medium.

## Revendications

1. Procédé de fourniture d'une matière de départ mixte (110) traitée contenant de la cellulose et permettant de former un corps moulé cellulosique (102) régénéré, où le procédé comprend les étapes consistant à :
fournir (10) une première matière de départ (101a) contenant une matière première lignocellulosique ;
fournir (1) une seconde matière de départ (101b) contenant un produit exempt de lignine et contenant de la cellulose ;
mélanger (15) la première matière de départ (101a) et la seconde matière de départ (101b) pour fournir une matière de départ mixte (101) ; et
traiter (20) au moins partiellement de manière commune la première matière de départ (101a) et la seconde matière de départ (101b) pour obtenir la matière de départ mixte (110) traitée contenant de la cellulose, en particulier une pâte mixte, où la matière première lignocellulosique est choisie parmi le groupe constitué de : une pâte de bois, en particulier des copeaux de bois, des plantes annuelles et
où le produit exempt de lignine et contenant de la cellulose comprend des textiles.

2. Procédé selon la revendication 1, où l'étape de fourniture (10) de la première matière de départ (101a) présente au moins l'une des étapes caractéristiques ci-dessous consistant à :
préparer la matière première lignocellulosique, en particulier la broyer, en particulier la débarrasser de son écorce ;
où les copeaux de bois de la première matière de départ (101a) présentent une longueur moyenne située dans la plage comprise entre 2 et 8 cm et/ou une épaisseur moyenne située dans la plage comprise entre 0,2 et 2,0 cm.

3. Procédé selon la revendication 1, où la fourniture (1) de la seconde matière de départ (101b) comprend au moins l'une des étapes caractéristiques ci-dessous consistant à :
préparer le produit exempt de lignine et contenant de la cellulose, en particulier le broyer, en particulier le débarrasser au moins partiellement des substances étrangères non fibreuses ;
ajuster (2) une composition essentiellement prédéfinie, où l'ajustement (2) comprend les étapes consistant à :
enrichir de manière sélective au moins un composant de composition et/ou
appauvrir de manière sélective au moins un composant de composition.

4. Procédé selon la revendication 1 ou 3,
où les textiles, en particulier des textiles usagés, contiennent des substances étrangères non cellulosiques, en particulier des fibres synthétiques, et où l'étape de fourniture (1) présente en outre les étapes ci-dessous consistant à :
séparer mécaniquement au moins une partie des substances étrangères non cellulosiques ; et/ou
séparer chimiquement au moins une partie des substances étrangères non cellulosiques.

5. Procédé selon l'une quelconque des revendications précédentes, où l'étape de traitement (20) comprend au moins l'une des étapes caractéristiques ci-dessous consistant à :
mettre en œuvre un procédé de cuisson (30), en particulier au moyen d'au moins un parmi le groupe constitué de : un procédé sulfate, un procédé sulfite, un procédé organosolv, en particulier un procédé gamma-valérolactone, un procédé avec un liquide ionique ;
mettre en œuvre un procédé de blanchiment (40), en particulier après le procédé de cuisson (30) ;
mettre en œuvre un procédé de nettoyage (41) ;
mettre en œuvre un procédé de séchage (42) de la matière de départ mixte (110) traitée, en particulier d'une pulpe de pâte mixte ;
introduire un agent oxydant, en particulier de l'oxygène, dans le procédé de cuisson (30) ;
augmenter la pression pendant le procédé de cuisson (30) au-dessus de la pression atmosphérique ;
mélanger (15) la première matière de départ (101a) et la seconde matière de départ (101b) de telle manière que la proportion de la première matière de départ (101a) se situe dans la plage comprise entre 1 et 99 %, en particulier entre 5 et 90 %, en particulier entre 10 et 80 %, par rapport au poids total des masses solides ;
mélanger (15) la première matière de départ (101a) sous la forme d'une suspension de cellulose liquide avec la seconde matière de départ (101b) sous la forme d'une suspension de cellulose liquide ;
mettre en œuvre le procédé de cuisson (30) de telle manière que le degré moyen de polymérisation de la cellulose se situe dans une plage prédéfinie ;
mettre en œuvre un procédé enzymatique ;
mettre en œuvre un procédé continu, comprenant en particulier les étapes consistant à :
fournir de manière continue la première matière de départ (101a) et/ou
fournir de manière continue la seconde matière de départ (101b) ;
mélanger (15) de manière continue la première matière de départ (101a) et la seconde matière de départ (101b) ; et
traiter (20) au moins partiellement de manière commune et continue la matière de départ mixte (101).

6. Procédé selon l'une quelconque des revendications précédentes, où l'étape de mélange (15) comprend en outre l'étape consistant à :
mélanger (15) la première matière de départ (101a) et la seconde matière de départ (101b) à l'un des moments ci-dessous :
avant une préhydrolyse ;
avant le procédé de cuisson (30) ;
pendant le procédé de cuisson (30) ;
après le procédé de cuisson (30) ;
avant le procédé de blanchiment (40) ;
pendant une séquence de blanchiment (40) ;
après le procédé de blanchiment (40) ;
avant un séchage (42).

7. Procédé selon la revendication 5 ou 6, où le mélange (15) comprend en outre les étapes ci-dessous consistant à :
introduire (10) la première matière de départ (101a) dans le procédé de cuisson (30), puis introduire (1) la seconde matière de départ (101b) dans le procédé de cuisson (30), en particulier lorsque la seconde matière de départ (101b) présente une faible proportion de substances étrangères non cellulosiques ;
ou
introduire (1) la seconde matière de départ (101b) dans le procédé de cuisson (30), puis introduire (10) la première matière de départ (101a) dans le procédé de cuisson (30), en particulier lorsque la seconde matière de départ (101b) présente une proportion élevée en substances étrangères non cellulosiques.

8. Procédé de fabrication d'un corps moulé cellulosique (102), en particulier régénéré, où le procédé comprend les étapes consistant à :
fournir (50) une matière de départ mixte (110) traitée contenant de la cellulose selon l'une quelconque des revendications précédentes ; et
former (80) le corps moulé cellulosique (102) à partir de la matière de départ mixte (110) traitée contenant de la cellulose.

9. Procédé selon la revendication 8, présentant au moins l'une des caractéristiques ci-dessous :
la formation (80) du corps moulé cellulosique (102), en particulier régénéré, à partir de la matière de départ mixte (110) traitée contenant de la cellulose comprend un élément choisi parmi le groupe constitué de : un procédé de dissolution directe, en particulier un procédé lyocell, un procédé viscose, en particulier un procédé carbamate ou un procédé alcalin froid, un procédé de fabrication du papier ;
le corps moulé cellulosique (102), en particulier régénéré, est choisi parmi le groupe constitué de : un filament, une fibre, une feuille, une éponge, une microsphère, une perle, un non-tissé ou une pâte à papier.

10. Matière de départ mixte (110) traitée contenant de la cellulose, produite grâce à un procédé selon l'une quelconque des revendications 1 à 9, en particulier une pâte mixte, produite grâce à un procédé selon l'une quelconque des revendications 1 à 9, contenant au moins l'une des substances caractéristiques ci-dessous :
des substances étrangères intrinsèquement non cellulosiques, en particulier des oxydes métalliques, en particulier des pigments ;
des fibres synthétiques, en particulier du polyuréthane, en particulier de l'élasthanne ;
10 % ou moins de cellulose présentant un degré moyen de polymérisation situé dans la plage comprise entre 50 et 200 monomères ;
de la cellulose présentant un degré moyen de polymérisation supérieur ou égal à 300 monomères, en particulier supérieur ou égal à 500 monomères ;
une proportion de fibres naturelles, en particulier de fibres de coton, supérieure à 1 %, en particulier supérieure à 10 %.

11. Utilisation commune d'une matière première contenant de la lignine, comprenant de la pâte de bois, en particulier du bois et/ou des plantes annuelles, et d'un produit exempt de lignine, comprenant des textiles, dans au moins une étape de traitement (20), en particulier d'un procédé de cuisson (30), afin de préparer une pâte mixte (110) destinée à la production d'un corps moulé cellulosique (102).

12. Déchet (107) provenant d'un procédé selon l'une quelconque des revendications 1 à 9, en particulier produit de lessivage résiduaire provenant d'un procédé selon l'une quelconque des revendications 1 à 9, contenant :
de la lignine ;
au moins un produit de réaction en provenance d'un procédé de cuisson, en particulier d'un procédé sulfate ou d'un procédé sulfite ;
au moins un élément parmi le groupe constitué de : fibres de coton et fibres synthétiques, en particulier fibres en matière plastique.

13. Utilisation du déchet (107) selon la revendication 12 comme agent de production d'énergie, sous-produit ou agent de récupération de produits chimiques.
